(19) Europäisches Patentamt
European Patent Office
Office européen des brevets

(11) **EP 2 617 758 A1**

(12) **EUROPEAN PATENT APPLICATION**
published in accordance with Art. 153(4) EPC

(43) Date of publication:
**24.07.2013 Bulletin 2013/30**

(51) Int Cl.:
*C08J 5/18* (2006.01)   *B32B 27/00* (2006.01)

(21) Application number: **11824964.8**

(86) International application number:
**PCT/JP2011/069264**

(22) Date of filing: **26.08.2011**

(87) International publication number:
**WO 2012/035956 (22.03.2012 Gazette 2012/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2010 JP 2010206495**
**15.09.2010 JP 2010206493**

(71) Applicant: **Toray Industries, Inc.**
**Tokyo 103-8666 (JP)**

(72) Inventors:
• **SAKAMOTO, Mitsutaka**
**Shiga 520-8558 (JP)**
• **MANABE, Isao**
**Shiga 520-8558 (JP)**
• **TAKAHASHI, Kozo**
**Shiga 520-8558 (JP)**

(74) Representative: **Prüfer & Partner GbR**
**European Patent Attorneys**
**Sohnckestrasse 12**
**81479 München (DE)**

(54) **MOLDING FILM AND MOLDING TRANSFER FOIL**

(57)    The present invention relates to a film for molding which comprises a cyclic olefin polymer in an amount of 50% by mass to 100% by mass with respect to the total amount of the film and has a storage elastic modulus at 75°C of 1,000 MPa to 3,000 MPa and a storage elastic modulus at 120°C of not greater than 100 MPa.

By the present invention, a film for molding which exhibits excellent dimensional, stability during processings such as coating, lamination, printing and vapor deposition and is thus suitably used in molding transfer foil applications is provided.

**Description**

TECHNICAL FIELD

The present invention relates to a film for molding which comprises a cyclic olefin polymer as a main component.

BACKGROUND ART

In recent years, due to increasing environmental awareness, in the fields of building materials, automotive parts, cellular phones, electric appliances and the like, there is an increased demand for solvent-less coating and alternatives to plating, and utilization of a decoration method using a film has become more facilitated.
As a biaxially-stretched polyester film for molding, there have been several proposals, such as a polyester film for molding in which a specific molding stress at normal temperature is defined (Patent Document 1) and a polyester film for molding in which the molding stress, thermal shrinkage and planar orientation degree at 25°C and 100°C are defined (Patent Document 2).
There is also proposed an unstretched polyester film for molding which has excellent formability at low temperatures and utilizes amorphous polyester (Patent Document 3). Furthermore, as a film for transfer foil which can be used for printing processes and coating processes, a film in which a polyolefin film is laminated onto at least either side of an unstretched polyester film is proposed (Patent Document 4). Moreover, there is proposed a mold release film comprising a cyclic olefin polymer (Patent Document 5) and, as a cyclic olefin-based film for cosmetic sheet, a film in which polyethylene is blended with a cyclic olefin is proposed (Patent Document 6).

PRIOR ART DOCUMENTS

PATENT DOCUMENTS

[Patent Document 1] JP 2001-347565A
[Patent Document 2] JP 2008-095084A
[Patent Document 3] JP 2007-246910A
[Patent Document 4] JP 2004-188708A
[Patent Document 5] JP 2006-257399A
[Patent Document 6] JP 2005-162965A

SUMMARY OF THE INVENTION

PROBLEMS TO BE SOLVED BY THE INVENTION

However, since those films of Patent Documents 1 and 2 are biaxially-stretched polyester films, although these films have excellent thermostability, they do not have sufficient formability.
The film of Patent Document 3 has poor resistance to solvents, so that it cannot endure printing processes and coating processes.
The film of Patent Document 4 has poor appearance of surfaces due to the use of polypropylene as polyolefin; therefore, it is difficult to use this film in such applications where the surfaces are required to be free of irregularities.
Those films of Patent Documents 5 and 6 do not have such a design that is thoroughly considered for processability and formability, nor for appearance of surfaces.
The first problem of the present invention is to provide a film for molding which can exhibit both excellent dimensional stability and excellent formability during processings. Further, the second problem of the present invention is to provide a film for molding which has excellent appearance of surfaces and ease of handling.

MEANS FOR SOLVING THE PROBLEMS

In order to solve the first problem, the first film for molding according to the present invention comprises a cyclic olefin polymer in an amount of 50% by mass to 100% by mass with respect to the total amount of the film and has a storage elastic modulus at 75°C of 1,000 MPa to 3,000 MPa and a storage elastic modulus at 120°C of not greater than 100 MPa.
In order to solve the second problem, the second film for molding according to the present invention comprises a cyclic olefin polymer in an amount of 50% by mass to 100% by mass with respect to the total amount of the film. The second film for molding has a gloss value (60°) of not less than 100 on at least either side thereof and also has a tear propagation resistance of not less than 10 N/mm and a tensile elongation at break of not less than 300% at 120°C.

Further, in the molding transfer foil according to the present invention, at least on either side of the first or second film for molding, a clear coat layer, a decoration layer and an adhesive layer are laminated in this order from the side of the film for molding.

EFFECTS OF THE INVENTION

The first film for molding has excellent dimensional stability during processings such as coating, lamination, printing and vapor deposition. The second film for molding has excellent appearance of surfaces and excellent ease of handling when used for decoration. The first and second films for molding can be applied to a variety of molding processes since they can attain good formability in various molding methods such as vacuum molding, compression molding and press molding. The first and second films for molding can be suitably used as, for example, a film for molding transfer foil used for decorating transfer molded parts such as building materials, automotive parts, cellular phones, electric appliances and game machine components.

MODE FOR CARRYING OUT THE INVENTION

[First and Second Films for Molding]

[Cyclic Olefin Polymer]

The first and second films for molding according to the present invention contain a cyclic olefin polymer in an amount of 50% by mass to 100% by mass, taking the total amount of all components of the respective films as 100% by mass. By containing a cyclic olefin polymer as a main component, the films can attain both satisfactory dimensional stability and satisfactory deep-drawing formability during processings such as coating, lamination, printing and vapor deposition. In addition, by using a cyclic olefin polymer, the resulting transfer molded parts are provided with good appearance of surfaces.

Here, in cases where the first and second films for molding are laminated films composed of a plurality of layers, taking the total amount of all components contained in all of the layers constituting the respective laminated films as 100% by mass, the total amount of the cyclic olefin polymer contained in all of the layers is 50% by mass to 100% by mass.

The first and second films for molding contain a cyclic olefin polymer in an amount of preferably 70% by mass to 100% by mass, more preferably 80% by mass to 100% by mass, particularly preferably 90% by mass to 100% by mass.

The term "cyclic olefin polymer" refers to a resin having an alicyclic structure in the main chain of a polymer, which is obtained by polymerization of a cyclic olefin monomer.

Examples of cyclic olefin include monocyclic olefins such as cyclobutene, cyclopentene, cycloheptene, cyclooctene, cyclopentadiene and 1,3-cyclohexadiene; bicyclic olefins such as bicyclo[2,2,1]hept-2-ene, 5-methyl-bicyclo[2,2,1]hepta-2-ene, 5,5-dimethyl-bicyclo[2,2,1]hept-2-ene, 5-ethyl-bicyclo[2,2,1]hept-2-ene, 5-butyl-bicyclo[2,2,1]hept-2-ene, 5-ethylidene-bicyclo[2,2,1]hept-2-ene, 5-hexyl-bicyclo[2,2,l]hept-2-ene, 5-octyl-bicyclo[2,2,1]hept-2-ene, 5-octadecyl-bicyclo[2,2,1]hept-2-ene, 5-methylidene-bicyclo[2,2,1]hept-2-ene, 5-vinyl-bicyclo[2,2,1]hept-2-ene and 5-propenyl-bicyclo[2,2,1]hept-2-ene; tricyclic olefins such as tricyclo[4,3,0,1$^{2.5}$]deca-3,7-diene, tricyclo[4,3,0,1$^{2.5}$]deca-3-ene, tricyclo[4,3,0,1$^{2.5}$]undeca-3,7-diene, tricyclo[4,3,0,1$^{2.5}$]undeca-3,8-diene, tricyclo[4,3,0,1$^{2.5}$]undeca-3-ene which is a partial hydrogenation product of the above-described tricyclic olefins (or an adduct of cyclopentadiene and cyclohexene), 5-cyclopentyl-bicyclo[2,2,1]hept-2-ene, 5-cyclohexyl-bicyclo[2,2,1]hept-2-ene, 5-cyclohexenyl-bicyclo[2,2,1]hept-2-ene and 5-phenyl-bicyclo[2,2,1]hepta-2-ene; tetracyclic olefins such as tetracyclo[4,4,0,1$^{2.5}$,1$^{7.10}$]dodeca-3-ene, 8-methyl-tetracyclo[4,4,0,1$^{2.5}$,1$^{7.10}$]dodeca-3-ene, 8-ethyl-tetracyclo[4,4,0,1$^{2.5}$,1$^{7.10}$]dodeca-3-ene, 8-methylidene-tetracyclo[4,4,0,1$^{2.5}$,1$^{7.10}$]dodeca-3-ene, 8-ethylidene-tetracyclo[4,4,0,1$^{2.5}$,1$^{7.10}$]dodeca-3-ene, 8-vinyl-tetracyclo[4,4,0,1$^{2.5}$,1$^{7.10}$]dodeca-3-ene and 8-propenyl-tetracyclo[4,4,0,1$^{2.5}$,1$^{7.10}$]dodeca-3-ene; polycyclic olefins of tetramers such as 8-cyclopentyl-tetracyclo[4,4,0,1$^{2.5}$,1$^{7.10}$]dodeca-3-ene, 8-cyclohexyl-tetracyclo[4,4,0,1$^{2.5}$,1$^{7.10}$]dodeca-3-ene, 8-cyclohexenyl-tetracyclo[4,4,0,1$^{2.5}$,1$^{7.10}$]dodeca-3-ene, 8-phenyl-cyclopentyl-tetracyclo[4,4,0,1$^{2.5}$,1$^{7.10}$]dodeca-3-ene, tetracyclo[7,4,1$^{3.6}$,0$^{1.9}$,0$^{2.7}$]tetradeca-4,9,11,13-tetraene, tetracyclo[8,4,1$^{4.7}$,0$^{1.10}$,0$^{3.8}$]pentadeca-5,10,12,14-tetraene, pentacyclo[6,6,1$^{3.6}$,0$^{2.7}$,0$^{9.14}$]-4-hexadecene, pentacyclo[6,5,1,1$^{3.6}$,0$^{2.7}$,0$^{9.13}$]-4-pentadecene, pentacyclo[7,4,0,0$^{2.7}$,1$^{3.6}$,1$^{10.13}$]-4-pentadecene, heptacyclo[8,7,0,1$^{2.9}$,1$^{4.7}$,1$^{11.17}$,0$^{3.8}$,0$^{12.16}$]-5-eicosen, heptacyclo[8,7,0,1$^{2.9}$,0$^{3.8}$,1$^{4.7}$,0$^{12.17}$,1$^{13.16}$]-14-eicosen and cyclopentadiene; and derivatives of these cyclic olefins. These cyclic olefins may be used individually, or two or more thereof may be used in combination.

Among the above-described cyclic olefins, from the standpoints of productivity and surface properties, bicyclo[2,2,1]hept-2-ene (hereinafter, referred to as "norbornene"), cyclopentadiene, 1,3-cyclohexandiene and derivatives of these cyclic olefins are preferably used.

The cyclic olefin polymer may also be either a resin obtained by polymerization of the above-described cyclic olefin alone or a resin obtained by copolymerization of the above-described cyclic olefin and a chained olefin.

Examples of production method of the resin obtained by polymerization of a cyclic olefin alone include known methods such as addition polymerization and ring-opening polymerization of a cyclic olefin monomer, more specifically, a method in which norbornene and a derivative thereof are subjected to ring-opening metathesis polymerization and then hydrogenated; a method in which norbornene and a derivative thereof are subjected to addition polymerization; and a method in which cyclopentadiene and cyclohexadiene are subjected to 1,2- or 1,4-addition polymerization and then hydrogenated. Among those resins that are produced by these methods, from the standpoints of productivity, surface properties and formability, a resin obtained by ring-opening metathesis polymerization of norbornene and a derivative thereof and subsequent hydrogenation of the resultant is particularly preferred.

In cases where the cyclic olefin polymer is a resin obtained by copolymerization of a cyclic olefin and a chained olefin, preferred examples of the chained olefin include ethylene, propylene, 1-butene, 1-pentene, 1-hexene, 3-methyl-1-butene, 3-methyl-1-pentene; 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-methyl-1-hexene, 1-octene, 1-decene, 1-dodecene, 1-tetradecene, 1-hexadecene, 1-octadecene and 1-eicosen. Thereamong, from the standpoints of productivity and cost, ethylene can be particularly preferably employed. Further, examples of production method of the resin obtained by copolymerization of a cyclic olefin and a chained olefin include known methods such as addition polymerization between a cyclic olefin and a chained olefin, more specifically, a method in which norbornene, a derivative thereof and ethylene are subjected to addition polymerization. Among those resins that are produced by such method, from the standpoints of productivity, surface properties and formability, a copolymer of norbornene and ethylene is particularly preferred.

From the standpoint of attaining good adhesion between a film produced from the cyclic olefin polymer and a coating film, the cyclic olefin polymer may also contain a polar group. Examples of the polar group include carboxyl group, acid anhydride group, epoxy group, amide group, ester group and hydroxyl group. Examples of a method for incorporating a polar group into the cyclic olefin polymer include a method in which a polar group-containing unsaturated compound is graft-polymerized and/or copolymerized. Examples of the polar group-containing unsaturated compound include (meth)acrylic acid, maleic acid, maleic acid anhydride, itaconic acid anhydride, glycidyl (meth)acrylate, (meth)acrylic acid alkyl (C1 to C10) ester, maleic acid alkyl (C1 to C10) ester, (meth)acrylamide and 2-hydroxyethyl (meth)acrylate.

Here, the term "cyclic olefin polymer" used in the present invention means a polymer of a cyclic olefin-based resin which contains cyclic olefin monomer-derived components in a total amount of 50% by mass to 100% by mass with respect to 100% by mass of the polymer.

Further, the first and second films for molding may be constituted by a cyclic olefin polymer alone or may also contain other olefin-based resin(s) and/or a resin other than olefin-based resin(s), as long as the films contain the cyclic olefin polymer in an amount of 50% by mass to 100% by mass, taking the total amount of all components of the respective films as 100% by mass. As the olefin-based resin other than the cyclic olefin polymer, for example, a variety of polyethylene-based resins such as low-density polyethylenes, medium-density polyethylenes, high-density polyethylenes, linear low-density polyethylenes and ethylene-α olefin copolymers produced by polymerization using a metallocene catalyst and a variety of polypropylene-based resins such as polypropylenes, ethylene-propylene copolymers and ethylene-propylene-butene copolymers, as well as polyolefin-based resins such as methylpentene polymers, can be used. In addition, polymers composed of an α-olefin monomer such as ethylene, propylene, butene-1, pentene-1, 4-methylpentene-1, hexene-1 or octene-1 and random copolymers and block copolymers that are composed of such α-olefin monomers can also be used. Thereamong, from the standpoint of compatibility with the cyclic olefin polymer, as the olefin-based resin other than the cyclic olefin polymer, a variety of polyethylene-based resins and polypropylene-based resins are preferably used.

[Polyethylene-based resin and polypropylene-based resin]

It is preferred that the first and second films for molding contain a polyethylene-based resin and/or a polypropylene-based resin. By incorporating a polyethylene-based resin and/or a polypropylene-based resin, not only the shearing stress in the extrusion step can be reduced and generation of specks caused by formation of bridged structures can be inhibited, but also the toughness can be improved. On the other hand, when the content of the polyethylene-based resin and/or the polypropylene-based resin is high, the shape stability is impaired and wavy irregularities become more likely to be generated on the film surfaces. From the standpoints of quality, toughness and shape stability, the total content of the polyethylene-based resin and/or the polypropylene-based resin is preferably 1% by mass to 40% by mass with respect to 100% by mass of all components contained in each film. In cases where the films contain only either of a polyethylene-based resin and a polypropylene-based resin, the term "total content of the polyethylene-based resin and/or the polypropylene-based resin" used herein refers the content of the relevant resin and, in cases where the films contain both of a polyethylene-based resin and a polypropylene-based resin, the term refers to the combined content of both resins. The total content of the polyethylene-based resin and/or the polypropylene-based resin is more preferably 1% by mass to 30% by mass, particularly preferably 1% by mass to 20% by mass. Among polyethylene-based resins and polypropylene-based resins, from the standpoint of compatibility with the cyclic olefin polymer, a polyethylene-based resin is preferably employed and a high-density polyethylene or a linear low-density polyethylene is more preferably employed. Further, a linear low-density polyethylene is particularly preferably employed.

Here, the term "polyethylene-based resin" used in the present invention means a polymer of a polyethylene-based resin which contains ethylene-derived components in a total amount of 50% by mass to 100% by mass with respect to 100% by mass of the polymer. In addition, the term "polypropylene-based resin" used in the present invention means a polymer of a polypropylene-based resin which contains propylene-derived components in a total amount of 50% by mass to 100% by mass with respect to 100% by mass of the polymer.

[First film for molding]

[Storage elastic modulus]

In the first film for molding, from the standpoints of dimensional stability and formability during processings, the storage elastic modulus at 75°C is 1,000 MPa to 3,000 MPa. By controlling the storage elastic modulus at 75°C to be not less than 1,000 MPa, dimensional change during processings such as coating, lamination, printing and vapor deposition can be inhibited. Further, by controlling the storage elastic modulus at 75°C to be not greater than 3,000 MPa, while maintaining the dimensional stability, excellent formability can be achieved. From the standpoint of dimensional stability, the storage elastic modulus at 75°C is preferably not less than 1,100 MPa, more preferably not less than 1,200 MPa. Also, from the standpoint of formability, the storage elastic modulus at 75°C is preferably not greater than 2,500 MPa, more preferably not greater than 2,000 MPa. Here, to have the storage elastic modulus at 75°C in a specific numerical range means that the value thereof is in the numerical range in both an arbitrary direction of the film and the direction perpendicular thereto.

As a method of controlling the storage elastic modulus at 75°C of the first film form molding in the above-described range of 1,000 MPa to 3,000 MPa, it is preferred to adjust the total thickness of layers having a glass transition temperature of 80°C or higher to be not less than 50%, taking the total thickness of the film as 100%. In cases where there is only one layer having a glass transition temperature of 80°C or higher, the term "total thickness of layers having a glass transition temperature of 80°C or higher" used herein refers to the thickness of the layer itself and, in cases where there are plural layers that have a glass transition temperature of 80°C or higher, the term refers to the sum of the thicknesses of these layers. The method of controlling the glass transition temperature of each layer is not particularly restricted. For example, in cases where a copolymer of norbornene and ethylene is used as the cyclic olefin polymer, the glass transition temperature of a layer can be elevated by increasing the norbornene content in the layer. Further, the glass transition temperature of a layer can be adjusted also by blending two kinds of cyclic olefin polymers having different norbornene contents. Moreover, for example, in cases where a resin obtained by ring-opening metathesis polymerization of a norbornene derivative and subsequent hydrogenation of the resulting polymerization product is used as the cyclic olefin polymer, the glass transition temperature of a layer can be elevated by increasing the molecular weight of the norbornene derivative (for example, by increasing the molecular weight of the side chain or by allowing it to have a bicyclic structure). Furthermore, the glass transition temperature of a layer can be adjusted also by blending two kinds of resins having different glass transition temperatures that are obtained by ring-opening metathesis polymerization of a norbornene derivative and subsequent hydrogenation of the resulting polymerization product. It is more preferred that the total thickness of layers having a glass transition temperature of 85°C or higher be not less than 50% and it is particularly preferred that the total thickness of layers having a glass transition temperature of 90°C or higher be not less than 50%. Here, in cases where there are plural glass transition temperatures, such as a case where a plurality of resins are mixed in one layer, the highest one is defined as the glass transition temperature of the layer.

It is noted here that, even when a cyclic olefin polymer, a polyethylene-based resin and/or a polypropylene-based resin are contained in a layer, since the glass transition temperature of the polyethylene-based resin and that of the polypropylene-based resin are both not higher than room temperature, the glass transition temperature of the layer is determined by that of the cyclic olefin polymer. However, when the total content of the polyethylene-based resin and the polypropylene-based resin exceeds 50% by mass with respect to the total amount of all components of the film, the storage elastic modulus at 75°C is reduced, so that the dimensional stability during processings becomes insufficient. Therefore, in the first film for molding, the total content of a polyethylene-based resin and a polypropylene-based resin is preferably not higher than 50% by mass, more preferably not higher than 40% by mass, particularly preferably not higher than 30% by mass, most preferably not higher than 20% by mass, with respect to 100% by mass of all of the components contained in the film.

Further, in the first film for molding, from the standpoint of formability, the storage elastic modulus at 120°C is not greater than 100 MPa. When the storage elastic modulus at 120°C is not greater than 100 MPa, the film has excellent formability and the molding temperature can be set relatively low at 150°C or lower. In cases where even higher formability is required, the storage elastic modulus at 120°C is preferably not greater than 50 MPa, more preferably not greater than 20 MPa. Further, the lower limit of the storage elastic modulus is preferably not less than 0.5 MPa. Here, to have the storage elastic modulus at 120°C in a specific numerical range means that the value thereof is in the numerical range in both an arbitrary direction of the film and the direction perpendicular thereto.

As a method of controlling the storage elastic modulus at 120°C to be not greater than 100 MPa, it is preferred to adjust the total thickness of layers having a glass transition temperature of 120°C or lower to be not less than 50%, taking the total thickness of the film as 100%. It is more preferred that the total thickness of layers having a glass transition temperature of 110°C or lower be not less than 50% and it is particularly preferred that the total thickness of layers having a glass transition temperature of 105°C or lower be not less than 50%. Here, in cases where there are plural glass transition temperatures, such as a case where a plurality of resins are mixed in one layer, the highest one is defined as the glass transition temperature of the layer.

That is, as a method of allowing the first film for molding to have a storage elastic modulus at 75°C of 1,000 MPa to 3,000 MPa and a storage elastic modulus at 120°C of not greater than 100 MPa, for example, a method in which the total thickness of layers having a glass transition temperature of 80°C to 120°C is controlled to be 50% or more and the total content of the polyethylene-based resin and/or the polypropylene-based resin is controlled to be less than 50% by mass with respect to 100% by mass of all of the components contained in the film is employed.

[Second film for molding]

[Gloss value]

The second film for molding has a gloss value (60°) of not lower than 100 at least on either side thereof from the standpoint of imparting, when the film is used for decoration, good appearance of surfaces to the resulting transfer molded part (a member of a decorated product). Here, the term "gloss value (60°)" refers to a gloss value which is measured in accordance with JIS Z-8741-1997 by setting the incidence angle and the acceptance angle at 60°. In order to attain better appearance of surfaces, the gloss value (60°) at least on either side of the film is preferably not lower than 130, more preferably not lower than 155. The upper limit of the gloss value (60°) at least on either side of the film is not particularly restricted; however, when it is higher than 200, the friction coefficient of the film surface is increased and it may become difficult to wind the film into a roll. Therefore, it is preferred that the gloss value (60°) at least on either side of the film be not higher than 200.

As a method of controlling the gloss value (60°) at least on either side of the film to be not lower than 100, for example, a method in which a casting roll having smooth surface is used at the time of film formation may be employed. By using a casting roll having smooth surface, the smooth roll surface is transferred onto a cast film, so that the gloss value of the film for molding is improved on the side of the surface in contact with the casting roll.

In order to attain the gloss value in the above-described range by using a casting roll having smooth surface at the time of film formation, the arithmetic mean deviation of the profile (Ra) of the casting roll surface, which is measured in accordance with JIS B-0601-2001, is preferably not greater than 50 nm, more preferably not greater than 40 nm, particularly preferably not greater than 20 nm. Further, although the lower limit of the arithmetic mean deviation of the profile (Ra) of the casting roll is not particularly restricted, considering the ease of taking up the film into a roll, it is preferred that the arithmetic mean deviation of the profile (Ra) be not less than 5 nm.

As for the surface roughness of the casting roll, a desired surface roughness can be attained by adjusting the grinding condition of the casting roll surface. In particular, it is preferred that a buff-polishing step be performed after grinding since it allows the surface properties to be more accurately controlled. Examples of a method for measuring the surface roughness of a casting roll include one in which a replica sample is prepared by pressing and drying triacetyl cellulose or the like dissolved in an organic solvent onto the surface of a roll and subsequently transferring the surface profile of the roll onto the resulting film; and then the surface roughness of the thus obtained replica sample is measured.

Further, as a method of further improving the gloss value of the second film for molding by more strongly transferring the smoothness of the casting roll onto the film, for example, a method in which a film is tightly adhered onto a casting roll by electrostatic casting using a wire electrode or a method in which a film is pressed on a casting roll by a nip roll at the time of film production can be employed.

In cases where the second film for molding is used as a transfer foil, a transfer molded part having excellent appearance of surfaces can be obtained by laminating the below-described clear coat layer, decoration layer, adhesion layer and the like on a surface having a gloss value (60°) of not lower than 100 and subsequently molding the resulting laminate. Therefore, the second film for molding may have a surface having a gloss value (60°) of not lower than 100 on only either side or on both sides.

Still, in cases where the second film for molding is used as a molding transfer foil, from the standpoint of the yield of the resulting transfer molded part, it is more preferred that both surfaces of the film have a gloss value (60°) of not lower than 100. In cases where the second film for molding is used as a molding transfer foil, a defect in the lamination of a decoration layer, a clear coat layer or the like causes poor appearance of the resulting transfer molded part, which leads to product loss. Therefore, by finding such a defect in the lamination of a decoration layer or a clear coat in advance prior to molding process, it becomes possible to move the section of defective lamination out of the part to be transferred to the molding body (adherend) (resin to be molded before decoration), so that product loss can be reduced. Further, when setting a molding transfer foil on a molding machine, the molding transfer foil is placed with the surface on which a clear coat layer, a decoration layer, an adhesion layer and the like are laminated facing the molding body (adherend). In addition, the molding body (adherend) is generally arranged in a lower part of molding box. Therefore, in order to check for defective lamination of the film for molding prior to molding process, it is required that defective lamination be found from the side of the second film for molding, which is not laminated with a clear coat layer, a decoration layer, an adhesion layer or the like. In cases where only one surface of the film has a gloss value (60°) of not lower than 100 and the other surface has a gloss value (60°) of less than 100, depending on the colors of the decoration layer, clear coat layer and the like, it may be difficult to find defective lamination on the molding transfer foil from the side which is not laminated with a clear coat layer, a decoration layer, an adhesion layer or the like.

When both surfaces of the film has a gloss value (60°) of not lower than 100, since the film surfaces have a high friction coefficient, it may be difficult to wind the film into a roll. In such a case, the film may be rolled up after laminating a protection film on the surface thereof. The protection film is not particularly restricted; however, since the roughness of the protection film surface may potentially be transferred onto the film for molding, a film having excellent surface smoothness, for example, a polyolefin-based self-adhesive film used in optical applications or a PET film coated with a mold releasing property-imparting material such as a silicone resin, is preferably employed.

Meanwhile, from the standpoint of ease of take-up, a method in which the gloss value (60°) of only either surface of the film is controlled to be not lower than 100 and the other surface is roughened may be employed. Examples of a method for roughening the film surface include a method in which a film is prepared to have a laminated structure and a lubricant such as a filler is added to one of the layers; and a method in which a film is pressed on a casting roll by a nip roll having a rough surface at the time of film production.

The materials of the casting roll and the nip roll that are used in the production of the second film for molding are not particularly restricted; however, when it is desired to form a glossy surface, the materials are preferably metallic materials and, when it is desired to roughen a surface of the film for improvement of the ease of take-up, the materials are preferably rubber materials.

[Tear propagation resistance]

In the second film for molding, from the standpoint of tearing resistance, the tear propagation resistance, which is measured in accordance with JIS K-7128-2-1998, is not less than 10 N/mm. In cases where the second film for molding is used as a molding transfer foil, after forming a decoration layer on the film for molding and transferring the decoration layer onto a molding body (adherend) simultaneously with molding, the resulting film for molding is detached from the molding body (adherend). When the tear propagation resistance is less than 10 N/mm, the film for molding may be torn at the time of the detachment, impairing the workability. In order to improve the workability in the use of the film for molding as a molding transfer foil, the tear propagation resistance of the film for molding is preferably not less than 15 N/mm, more preferably not less than 20 N/mm, particularly preferably not less than 30 N/mm, most preferably not less than 40 N/mm. Further, although the upper limit of the tear propagation resistance is not particularly restricted, considering that the film for molding contains a cyclic olefin polymer as a main component, the tear propagation resistance is not greater than 100 N/mm. Here, to have the tear propagation resistance in a specific numerical range means that the value thereof is in the numerical range in both an arbitrary direction of the film and the direction perpendicular thereto.

Examples of a method of controlling the tear propagation resistance at not less than 10 N/mm include a method in which an olefin resin other than a cyclic olefin polymer is incorporated into the film for molding; and a method in which the ratio of the cyclic olefin monomer-derived components in a cyclic olefin polymer contained in the film for molding is reduced.

In cases where an olefin resin other than a cyclic olefin polymer is incorporated into the film for molding in order to control the tear propagation resistance at not less than 10 N/mm, as the olefin resin other than a cyclic olefin polymer, a variety of polyethylene-based resins such as low-density polyethylenes, medium-density polyethylenes, high-density polyethylenes, linear low-density polyethylenes and ethylene-$\alpha$ olefin copolymers produced by polymerization using a metallocene catalyst and a variety of polypropylene-based resins such as polypropylenes, ethylene-propylene copolymers and ethylene-propylene-butene copolymers, as well as polyolefin-based resins such as methylpentene polymers, can be used. In addition, polymers composed of an $\alpha$-olefin monomer such as ethylene, propylene, butene-1, pentene-1, 4-methylpentene-1, hexene-1 or octene-1 and random copolymers and block copolymers that are composed of such $\alpha$-olefin monomers can also be used. Thereamong, from the standpoint of compatibility with the cyclic olefin polymer, a variety of polyethylene-based resins and polypropylene-based resins are preferably used. Among polyethylene-based resins and polypropylene-based resins, from the standpoint of compatibility with the cyclic olefin polymer, a polyethylene-based resin is preferably used and a high-density polyethylene or a linear low-density polyethylene is more preferably used. Further, a linear low-density polyethylene is particularly preferably used.

In order to control the tear propagation resistance at not less than 10 N/mm, the second film for molding contains the olefin resin other than the cyclic olefin polymer in an amount of preferably 1% by mass to 40% by mass, more preferably 1% by mass to 30% by mass, particularly preferably 1% by mass to 20% by mass, with respect to 100% by mass of the film as a whole.

In cases where the content of the cyclic olefin monomer-derived components in the cyclic olefin polymer contained in the film for molding is reduced in order to control the tear propagation resistance at not less than 10 N/mm, the content of the cyclic olefin monomer-derived components is preferably not higher than 85% by mass, more preferably not higher than 80% by mass, particularly preferably not higher than 75% by mass, with respect to 100% by mass of the cyclic olefin polymer. Further, the lower limit of the content of the cyclic olefin monomer-derived components is 50% by mass with respect to 100% by mass of the cyclic olefin polymer.

[First and second films for molding]

[Contents of cyclic olefin polymer, polyethylene-based resin and polypropylene-based resin]

In order to attain satisfactory toughness, quality and appearance of surfaces, it is preferred that the first and second films for molding be constituted by a layer A which comprises a cyclic olefin polymer in an amount of 50% by mass to 100% by mass and a polyethylene-based resin and/or a polypropylene-based resin in a combined amount of 1% by mass to 40% by mass, with respect to the layer A as a whole; and a layer B which is laminated at least on either side of the layer A and comprises a cyclic olefin polymer in an amount of 50% by mass to 100% by mass with respect to the layer B as a whole. Here, in cases where the layer A contains only either of a polyethylene-based resin and a polypropylene-based resin, the term "a polyethylene-based resin and/or a polypropylene-based resin in a combined amount" refers the content of the relevant resin and, in cases where the layer A contains both of a polyethylene-based resin and a polypropylene-based resin, the term refers to the total content of both resins.

A cyclic olefin polymer has a lower toughness as compared to polyethylene-based resins and polypropylene-based resins; however, by incorporating a polyethylene-based resin and/or a polypropylene-based resin, the toughness of the films for molding can be improved. Meanwhile, an addition of a polyethylene based resin and/or a polypropylene-based resin tends to impair the appearance of surfaces. Therefore, in order to satisfy both the toughness and the appearance of surfaces at the same time, it is preferred that the films for molding have a laminated structure in which the layer B constitutes the outermost layer of the respective films.

Further, from the standpoints of toughness and shape stability, the total content of the polyethylene-based resin and/or the polypropylene-based resin in the layer A is preferably 1% by mass to 30% by mass, more preferably 1% by mass to 20% by mass, with respect to 100% by mass of the layer A as a whole.

Further, from the standpoint of appearance of surfaces, the layer B contains a polyethylene-based resin and/or a polypropylene-based resin in a combined amount of preferably 0% by mass to 10% by mass, more preferably 0% by mass to 5% by mass, with respect to 100% by mass of the layer B as a whole. It is particularly preferred that the layer B be constituted solely by a cyclic olefin polymer, that is, the total content of a polyethylene-based resin and/or a polypropylene-based resin in the layer B be 0% by mass.

[Laminated structure]

In cases where the respective films for molding have a laminated structure, from the standpoints of toughness, shape stability and appearance of surfaces, the thickness ratio of the layers (total thickness of layer B/layer A) is preferably 0.25 to 1. Here, in cases where the film has only one layer B, the term "total thickness of layer B" refers to the thickness of the layer B itself and, in cases where the film has two layer Bs, the term refers to the total thickness of the two layer Bs. The thickness ratio (total thickness of layer B/layer A) is more preferably 0.4 to 0.8. The thickness ratio can be measured by observing a cross-section of the film under a scanning electron microscope, a transmission electron microscope, a light microscope or the like at a magnification of $\times$500 to $\times$ 1,000.

In cases where the first and second films for molding have a laminated structure, in order to further improve the ease of handling, the laminated structure preferably has a three-layer constitution of layer B/layer A/layer B rather than a bilayer constitution of layer A/layer B.

In cases where the first and second films for molding have a laminated structure, from the standpoints of dimensional stability and formability during processings, it is preferred that the layer A have a glass transition temperature of 70°C to 110°C. When the glass transition temperature of the layer A is 70°C or higher, dimensional change during processings such as coating, lamination, printing and vapor deposition can be inhibited. Further, when the glass transition temperature of the layer A is 110°C or lower, while maintaining the dimensional stability, excellent formability can also be achieved. From the standpoint of dimensional stability, the glass transition temperature of the layer A is more preferably not lower than 75°C, particularly preferably not lower than 80°C. From the standpoint of formability, the glass transition temperature of the layer A is more preferably not higher than 105°C, particularly preferably not higher than 100°C. Here, in cases where the layer A has a plurality of glass transition temperatures, the highest one is adopted as the glass transition temperature of the layer A.

In order to control the glass transition temperature of the layer A at 70°C to 110°C, for example, in cases where a copolymer of norbornene and ethylene is used as the cyclic olefin polymer, the glass transition temperature can be elevated by increasing the norbornene content. Further, the glass transition temperature of the layer A can be adjusted also by blending two kinds of cyclic olefin polymers having different norbornene contents.

Further, in cases where the use of the film is expanded to those applications where there is a stringent requirement particularly for the dimensional stability during processings, it is preferred that the glass transition temperature of the layer B be 75°C to 120°C and higher than that of the layer A. The higher the glass transition temperature of the layer B is made, the higher the storage elastic moduli at 75°C and 120°C of the film for molding become; however, by controlling the glass transition temperature of the layer B in the above-described range, dimensional change during processings can be better inhibited without impairing the formability. From the standpoint of dimensional stability, the glass transition temperature of the layer B is more preferably not lower than 80°C, particularly preferably not lower than 90°C. From the standpoint of formability, the glass transition temperature of the layer B is more preferably not higher than 115°C, particularly preferably not higher than 110°C. Here, in cases where the layer B has a plurality of glass transition temperatures, the highest one is adopted as the glass transition temperature of the layer B.

Further, in cases where the first and second films for molding are used in molding transfer foil applications, the higher the glass transition temperature, the better the mold-releasing property becomes; therefore, also from the standpoint of mold-releasing property, the glass transition temperature of the layer B is preferably not lower than 80°C.

In order to adjust the glass transition temperature of the layer B at 75°C to 120°C and to be higher than that of the layer A at the same time, for example, in cases where a copolymer of norbornene and ethylene is used as a cyclic olefin polymer, since the glass transition temperature can be elevated by increasing the norbornene content, a method in which the norbornene content of the cyclic olefin polymer in the layer B is increased to be higher than that of the cyclic olefin polymer in the layer A can be employed.

Further, from the standpoint of broadening the allowable temperature range during processings such as coating, lamination, printing and vapor deposition, it is preferred that the first and second films for molding have a laminated structure and that the layer B have a glass transition temperature higher than than that of tha layer A. In cases where the films for molding have a monolayer constitution, a sharp reduction in the storage elastic modulus is observed in the vicinity of the glass transition temperature when the film temperature is increased. Therefore, when the films are processed in the vicinity of their respective glass transition temperatures, non-uniform processing temperature may cause an abrupt change in the film shape to generate wrinkles. Meanwhile, by allowing the films for molding to have a laminated constitution and adjusting the glass transition temperature of the layer B to be higher than that of the layer A, such reduction in the storage elastic modulus caused by an increase in the film temperature is alleviated. Consequently, even in the vicinity of the glass transition temperature of the layer B, change in the film shape and generation of wrinkles during processings can be inhibited. That is, the allowable range of temperature variation during processings is also broadened. The lower limit of the difference between the glass transition temperature of the layer A and that of the layer B is preferably not less than 5°C, more preferably not less than 10°C, particularly preferably not less than 20°C. Further, from the standpoint of film-forming properties, the upper limit of the difference between the glass transition temperature of the layer A and that of the layer B is preferably not more than 50°C.

[Fatty acid metal salt]

From the standpoints of quality and appearance of surfaces, it is preferred that the first and second films for molding contain a fatty acid metal salt in an amount of 0.01 % by mass to 0.5% by mass with respect to 100% by mass of all of the components contained in the respective films. In order to improve the quality of the films, by incorporating a polyethylene-based resin and/or a polypropylene-based resin, not only the shearing stress in the extrusion step can be reduced and generation of specks caused by formation of bridged structures can be inhibited, but also the toughness can be improved. On the other hand, wavy irregularities become more likely to be generated on the film surfaces. Therefore, in order to expand the use of the first and second films for molding to those applications where there is a stringent requirement particularly for the film quality and appearance of surfaces, it is preferred that the content of the fatty acid metal salt be controlled in the above-described range. By allowing the films to contain a fatty acid metal salt in an amount of 0.01% by mass to 0.5% by mass, in the same manner as in the case of incorporating a polyethylene-based resin and/or a polypropylene-based resin, the lubricity of the cyclic olefin polymer composition during the extrusion of the respective films can be improved, so that generation of specks caused by formation of bridged structures can also be inhibited. Consequently, the films for molding are provided with an improved appearance of surfaces and the resulting transfer molded parts can also attain excellent appearance of surfaces after being molded.

Here, specific examples of the fatty acid metal salt which may be used include acetates such as sodium acetate, potassium acetate, magnesium acetate and calcium acetate; laurates such as sodium laurate, potassium laurate, potassium hydrogen laurate, magnesium laurate, calcium laurate, zinc laurate and silver laurate; myristates such as lithium myristate, sodium myristate, potassium hydrogen myristate, magnesium myristate, calcium myristate, zinc myristate and silver myristate; palmitates such as lithium palmitate, potassium palmitate, magnesium palmitate, calcium palmitate, zinc palmitate, copper palmitate, lead palmitate, thallium palmitate and cobalt palmitate; oleates such as sodium oleate, potassium oleate, magnesium oleate, calcium oleate, zinc oleate, lead oleate, thallium oleate, copper oleate and nickel oleate; stearates such as sodium stearate, lithium stearate, magnesium stearate, calcium stearate, barium stearate, aluminum stearate, thallium stearate, lead stearate, nickel stearate and beryllium stearate; isostearates such as sodium isostearate, potassium isostearate, magnesium isostearate, calcium isostearate, barium isostearate, aluminum isostearate, zinc isostearate and nickel isostearate; behenates such as sodium behenate, potassium behenate, magnesium behenate, calcium behenate, barium behenate, aluminum behenate, zinc behenate and nickel behenate; and montanates such as sodium montanate, potassium montanate, magnesium montanate, calcium montanate, barium montanate, aluminum montanate, zinc montanate and nickel montanate. These fatty acid metal salts may be used individually, or two or more thereof may be used in combination as a mixture. Thereamong, stearates and montanates are suitably used and, for example, sodium stearate, calcium stearate, potassium stearate, zinc stearate, barium stearate and sodium montanate are particularly suitably used.

Here, in cases where the first and second films for molding are laminated films having two or more of layer A (s) and layer B(s), the fatty acid metal salt preferably exhibits its effect even when it is contained in either of the layer A and the layer B; however, in particular, it is much preferred from the standpoint of appearance of surfaces that the fatty acid metal salt be contained in the layer B.

[Tensile elongation at break]

From the standpoint of formability, it is preferred that the first and second films for molding have a tensile elongation at break of not less than 300% at 120°C. The first and second films for molding can be molded by a variety of molding methods such as vacuum molding, compression molding, vacuum-compression molding and press molding; however, in order to improve the design properties of the resulting transfer molded part, it is preferred that a decoration layer be formed by, for example, coating, printing or vapor deposition. In order to be able to handle those cases where such decoration layer has a low thermostability, the molding temperature is preferably not higher than 150°C, more preferably not higher than 120°C. Accordingly, it is preferred that the tensile elongation at break of the films for molding at 120°C be not less than 300%. From the standpoints of formability and dimensional stability, the tensile elongation at break at 120°C is more preferably not less than 500%, particularly preferably not less than 700%, most preferably not less than 800%. Further, in particular, in cases where the films are used in an application where deep-drawing formability is required, it is preferred that the tensile elongation at break at 120°C be not less than 1,000%. From the standpoint of formability, a higher tensile elongation at break at 120°C is preferred; however, considering the dimensional stability, it is preferably not higher than 2,000%. Here, to have the tensile elongation at break at 75°C in a specific numerical range means that the value thereof is in the numerical range in both an arbitrary direction of the film and the direction perpendicular thereto.

The method of controlling the tensile elongation at break at 120°C to be not less than 300% is not particularly restricted; however, it is preferred that the total thickness of layers having a glass transition temperature of 110°C or lower be not less than 50%, taking the total thickness of the film as 100%. It is more preferred that the total thickness of layers having a glass transition temperature of 105°C or lower be not less than 50% and it is particularly preferred that the total thickness of layers having a glass transition temperature of 100°C or lower be not less than 50%. Here, in cases where a layer has a plurality of glass transition temperatures, the highest one is defined as the glass transition temperature of the layer.

[Film thickness]

From the standpoints of production stability, formability and dimensional stability, it is preferably that the first and second films for molding have a total thickness of 20 $\mu$m to 500 $\mu$m. The lower limit of the total thickness is more preferably not less than 50 $\mu$m, particularly preferably not less than 100 $\mu$m. The upper limit of the total thickness is more preferably not greater than 400 $\mu$m, particularly preferably not greater than 300 $\mu$m. Here, when the film for molding is constituted by one layer, the term "total thickness" means the thickness of the layer itself and, when the film for molding is constituted by two or more layers, the term "total thickness" means the sum of the thicknesses of all of the layers.

From the standpoint of formability and processability, it is preferred that the first and second films for molding have a thickness variation of not greater than 10%. By controlling the thickness variation at not greater than 10%, the films can be molded uniformly and variations during processings such as coating, lamination, printing and vapor deposition can be inhibited. The method of adjusting the films for molding to have a thickness variation of not greater than 10% is not particularly restricted, and examples thereof include a method in which the casting temperature is increased to such an extent which does not cause adhesion; a method in which a film is casted at a position off-aligned with the top of a casting roll in the direction of the rotation of the casting roll; and a method in which the die clearance is reduced. The thickness variation is more preferably not greater than 8%, particularly preferably not greater than 5%.

[Antioxidant]

From the standpoints of quality and appearance of surfaces, it is preferred that the first and second films for molding contain an antioxidant. By allowing the films to contain an antioxidant, deterioration of the cyclic olefin polymer caused by oxidation in the extrusion step can be prevented and generation of specks can be inhibited. The content of the antioxidant is preferably 0.01% by mass to 1% by mass with respect to 100% by mass of all of the components contained in the respective films. The antioxidant is not particularly restricted and any of known phosphite-based antioxidants, organic sulfur-based antioxidants, hindered phenol-based antioxidants and the like can be employed.

Examples of the phosphite-based antioxidants include ones which contain phosphite in the chemical structural formula, more specifically, IRGAFOS 38, IRGAFOS P-EPQ and IRGAFOS 126 (all of which are manufactured by Ciba Specialty Chemicals K.K.); SUMILIZER TNP, SUMILIZER TPP-P, SUMILIZER P-16 (all of which are manufactured by Sumitomo Chemical Co., Ltd.); and ADK STAB PEP-4C, ADK STAB PEP-8, ADK STAB 11C, ADK STAB PEP-36, ADK STAB HP-11, ADK STAB 260, ADK STAB 522A, ADK STAB 329K, ADK STAB 1500, ADK STAB C, ADK STAB 135A and ADK STAB 3010 (all of which are manufactured by ADEKA Corporation).

Examples of the organic sulfur-based antioxidants include ones which contain thioether in the chemical structural formula, more specifically, as commercially-available products, IRGANOX PS800FL and IRGANOX PS802FL (both of which are manufactured by Ciba Specialty Chemicals K.K.); SUMILIZER TP-M, SUMILIZER TP-D, SUMILIZER TL and SUMILIZER MB (all of which are manufactured by Sumitomo Chemical Co., Ltd.); and ADK STAB AO-23 (manufactured by ADEKA Corporation).

Examples of the hindered phenol-based antioxidants include ones which contain 2,6-alkylphenol in the chemical structural formula, more specifically, as commercially-available products, IRGANOX 245, IRGANOX 259, IRGANOX 565, IRGANOX 1010, IRGANOX 1035, IRGANOX 1076, IRGANOX 1098, IRGANOX 1222, IRGANOX 1330, IRGANOX 1425, IRGANOX 3114, IRGANOX 1520, IRGANOX 1135, IRGANOX 1141 and IRGANOX HP2251 (all of which are manufactured by Ciba Specialty Chemicals K.K.); SUMILIZER BHT, SUMILIZER MDP-S, SUMILIZER GA-80, SUMILIZER BBM-S, SUMILIZER WX-R, SUMILIZER GM and SUMILIZER GS (all of which are manufactured by Sumitomo Chemical Co., Ltd.); and ADK STAB AO-30 (manufactured by ADEKA Corporation). These antioxidants may be used individually, or two or more thereof may be used in combination.

[Other additives]

Further, the first and second films for molding (in the case of a laminated film, the respective layers constituting the laminated film) may also contain, as required, an appropriate amount of a flame retardant, a heat stabilizer, an antioxidant, an ultraviolet absorber, an antistatic agent, a plasticizer, an adhesion-imparting agent, an antifoaming agent such as polysiloxane and/or a coloring agent such as a pigment or a dye.

[Molding transfer foil]

Since the first and second films for molding contain a cyclic olefin polymer as a main component, they have excellent appearance of surfaces and mold-releasing property; therefore, among molding applications, the first and second films for molding are preferably used in molding transfer foil applications. By laminating a decoration layer on the first and second films for molding and transferring them onto a molded member simultaneously with molding, the respective films for molding and the decoration layer can be easily detached, so that a transfer molded part having excellent appearance of surfaces can be obtained. The constitution of the resulting molding transfer foil is not particularly restricted; however, it is preferred that the molding transfer foil has a constitution in which a decoration layer is laminated on the respective films for molding. It is noted here that the decoration layer is a layer for providing a decoration of color, pattern, wood-effect, metallic appearance, pearly appearance or the like. From the standpoints of damage resistance, weathering resistance and design properties, it is preferred that the transfer molded part (adherend) after the transfer be further laminated with a clear coat layer. In this case, it is preferred that the clear coat layer be laminated on the side of the film for molding. Further, from the standpoint of adhesion between the transfer molded part (adherend) after the transfer and a decoration layer, it is preferred that an adhesion layer be further laminated. In this case, it is preferred that the adhesion layer be laminated on the side of the adherend.

That is, an example of preferred embodiment is a constitution of film for molding/clear coat layer/decoration layer/adhesion layer. The term "clear coat layer" used herein refers to a highly glossy and highly transparent layer which is arranged as the outermost layer of the transfer molded part for improving the outer appearance thereof.

Here, the resin used as the clear coat layer is not particularly restricted as long as it is a highly transparent resin. For example, a polyester-based resin, a polyolefin-based resin, an acrylic resin, a urethane-based resin, a fluorine-based resin, a polyvinyl acetate-based resin, a vinyl chloride-vinyl acetate copolymer-based resin or an ethylene-vinyl acetate copolymer-based resin copolymer is preferably employed. From the standpoint of damage resistance, a thermosetting resin, an ultraviolet-curing resin or a heat radiation-curing resin is preferably employed. Further, in order to improve the weathering resistance, an ultraviolet and/or an ultraviolet-reflecting agent may also be added to the clear coat layer.

Further, from the standpoints of damage resistance and design properties, it is preferred that the clear coat layer have a thickness of 10 μm to 100 μm. The adjustment of the thickness is more preferably not less than 15 μm, particularly preferably not less than 20 μm. The upper limit of the thickness is more preferably not greater than 80 μm, particularly preferably not greater than 60 μm.

Examples of the method of forming such clear coat layer include a method by which a clear coat layer is directly formed; and a method in which a clear coat layer is formed on a carrier film once and then transferred. In cases where the thus formed clear coat layer is required to be dried at a high temperature, it is preferred to employ a method in which a clear coat layer is formed on a carrier film once and then transferred. As the method of forming the clear coat layer, for example, in addition to a roller coating method, a brush coating method, spray coating method and an immersion coating method, a method using a gravure coater, a die coater, a comma coater, a bar coater or a knife coater may be employed. Further, since the first and second films for molding contain a cyclic olefin polymer as a main component, they have poor resistance against aromatic solvents such as toluene and xylene. Therefore, it is preferred that the method be constituted in such a manner that an aromatic solvent is not used as a solvent in the formation of clear coat layer.

The method of forming the decoration layer is not particularly restricted and the decoration layer can be formed by, for example, coating, printing or metal-vapor deposition. When the decoration layer is formed by coating, a coating method such as gravure coating, roll coating or comma coating can be employed. Further, when the decoration layer is formed by printing, a printing method such as offset printing, gravure printing or screen printing can be employed. As the resin used in this process, a polyester-based resin, for example, a polyolefin-based resin, an acrylic resin, a urethane-based resin, a fluorine-based resin, a polyvinyl acetate-based resin, a vinyl chloride-vinyl acetate copolymer-based resin or an ethylene-vinyl acetate copolymer-based resin copolymer is preferably employed. The coloring agent to be used is not particularly restricted; however, taking into consideration the dispersion properties, the coloring agent is appropriately selected from dyes, inorganic pigments, organic pigments and the like.

From the standpoints of color retention and design properties, it is preferred that the decoration layer formed by coating or printing have a thickness of 10 μm to 100 μm. The lower limit of the thickness is more preferably 15 μm, particularly preferably not less than 20 μm. The upper limit of the thickness is more preferably not greater than 80 μm, particularly preferably not greater than 60 μm.

Further, in cases where the decoration layer is formed by metal-vapor deposition, the method of preparing a thin film to be deposited is not particularly restricted and, for example, a vacuum deposition method, an EB deposition method, a sputtering method or an ion-plating method can be employed. Here, in order to improve the adhesion between a polyester film and a deposited layer, it is desired that the surface on which deposition is performed be pretreated in advance by a corona discharge treatment or coating with an anchor coating agent. As the metal used for the metal-vapor deposition, from the standpoint of conformity with mold, a metal compound having a melting point of 150°C to 400°C is preferably employed. By using such a metal having a melting point in this range, the deposited metal layer can also be molded in the temperature range in which the films for molding according to the present invention can be molded, so that generation of a defect in the deposited layer caused by molding is more likely to be inhibited, which is preferred. The melting point of the metal compound is more preferably 150°C to 300°C. The metal compound having a melting point of 150°C to 400°C is not particularly restricted; however, indium (157°C) and tin (232°C) are preferred and indium can be particularly preferably employed.

It is preferred that the decoration layer have a laminated thickness of 0.001 μm to 100 μm. The lower limit of the thickness is more preferably not less than 0.01 μm, particularly preferably not less than 0.02 μm. The upper limit of the thickness is more preferably not greater than 80 μm, particularly preferably not greater than 60 μm.

As the material of the adhesion layer provided for the purpose of imparting a molded resin with adhesive property, a heat sensitive-type or pressure sensitive-type material can be employed. In cases where transfer is made onto an injection-molded resin or a resin molded article, the adhesion layer can be designed in accordance with the resin. When the resin is an acrylic resin, an acrylic resin is preferably employed as the material of the adhesion layer, and when the resin is a polyphenylene oxide-polystyrene-based resin, a polycarbonate-based resin, a styrene copolymer-based resin or a polystyrene-based resin, for example, a resin having an affinity thereto, such as an acrylic resin, a polystyrene-based resin or a polyamide-based resin, can be preferably employed. When the molded resin is a polypropylene-based resin, a chlorinated polyolefin-based resin, a chlorinated ethylene-vinyl acetate copolymer-based resin, a cyclized rubber or a coumarone-indene-based resin is preferably employed.

As the method of forming the adhesion layer, a variety of methods can be employed and, for example, a coating method such as roll coating, gravure coating or comma coating, or a printing method such as gravure printing or screen printing method, can be employed.

The adherend to be decorated by using a molding transfer foil containing the first and second films for molding is not particularly restricted and, for example, a resin such as polypropylene, acryl, polystyrene, polyacrylonitrile-styrene or polyacrylonitrile-butadiene-styrene or a metal member can be employed.

EXAMPLES

The present invention will now be described by way of examples thereof; however, the present invention is not restricted thereto. Here, the following methods were used to measure the respective properties.

(1) Film total thickness and thickness of each layer

In order to determine the total thickness of a laminated film, using a dial gauge, the thickness of a sample cut out from the film was measured at five arbitrary points and the average thereof was calculated.
In order to determine the thickness of each layer of a laminated film, using a metallographic microscope (Leica DMLM, manufactured by Leica Microsystems), a photograph of a cross-section of the film was taken at a magnification of $\times$ 100 by transmitting a light therethrough. Then, on the thus obtained photograph, for each layer of the laminated film, the thickness was measured at five arbitrary points and the average thereof was adopted as the thickness of the layer.

(2) Storage elastic modulus

A film was cut out into a rectangle of 60 mm in length and 5 mm in width in an arbitrary direction and the direction perpendicular thereto to prepare samples. Then, using a dynamic viscoclasticity measuring apparatus (RHEOSPECTRA DVE-V4 FT, manufactured by Rheology Co., Ltd.), the storage elastic modulus (E') in each direction was determined at 75°C and 120°C under the following conditions:

Frequency: 10 Hz, Gauge length: 20 mm, Displacement amplitude: 10 $\mu$m,
Measuring temperature range: 25°C to 160°C, Heating rate: 5°C/min.

(3) Glass transition temperature

The glass transition temperature was measured and analyzed in accordance of JIS K7121-1987 and JIS K7122-1987 using a differential scanning calorimeter (RDC220, manufactured by SEIKO Instruments Inc.).
As a sample, 5 mg of a film was used. For evaluation of a specific layer of the film, 5 mg of the layer to be measured was scraped off to prepare a sample. The thus obtained sample was heated from 25°C to 300°C at a rate of 20°C/min and the change in the specific heat caused by the transition from the glass state to the rubber state was measured. The glass transition temperature of the film was defined as a glass transition temperature determined at a midpoint of intersections between a straight line running parallel in the direction of the ordinate (the axis indicating the heat flux) to the straight line extending from each baseline and a curve of the region where the glass transition occurred stepwise. Here, in cases where there were plural glass transition temperatures, the highest one was adopted as the glass transition temperature of the film.

(4) Tensile elongation at break at 120°C

In an arbitrary direction and the direction perpendicular thereto, a film was cut out into a rectangle of 100 mm in length and 10 mm in width to prepare a sample. Then, using a tensile tester (TENSILON UCT-100, manufactured by Orientec Co., Ltd.), tensile test was performed in each of the longitudinal and transverse directions of the film at an initial tensile chuck distance of 20 mm and a tensile rate of 200 mm/min. The measurements of the tensile test were performed after placing the film sample into a thermostat layer which had been set at 120°C in advance and preheating the film sample for 60 seconds. The tensile elongation at break was defined as the elongation attained at the point when the sample was broken. It is noted here that a total of five measurements were performed for each sample in each direction and the tensile elongation at break was evaluated in terms of the average value thereof.

(5) Thickness variation

A film was cut out at an arbitrary spot into a size of 200 mm × 300 mm to prepare a sample. The thickness of the sample was measured at 11 points at 20-mm intervals from the edge in the direction of the 200-mm side and 11 points at 30-mm intervals in the direction of the 300-mm side for a total of 121 points and the maximum, minimum and average values were determined. The thickness variation was calculated by the following equation:

$$\text{Thickness variation (\%)} = \{(\text{Maximum value} - \text{Minimum value})/\text{Average value}\} \times 100.$$

(6) Quality

A film was cut out at an arbitrary spot into a size of 200 mm × 300 mm to prepare a sample. The thus obtained sample was visually observed under a three-wavelength fluorescent lamp and the number of specks having a major axis of 100 μm or longer was counted to determine the number of specks per an area of A4 size. The quality of the film was evaluated based on the following criteria.

   A: The number of specks was less than 10.
   B: The number of specks was 10 or more but less than 20.
   C: The number of specks was 20 or more but less than 30.
   D: The number of specks was 30 or more

(7) Appearance of surfaces

Using a film stretcher (KARO-IV, manufactured by Brückner Maschinenbau GmbH) a film was stretched under the following conditions. The appearance of the surfaces of the thus stretched film was evaluated based on the following criteria.
Initial sample: 100 mm × 100 mm, Preheating and stretching temperature:

   120°C, Preheating time: 20 seconds, Stretching rate: 20%/s, and Stretching ratio: 2 × 2

   A: The surface gloss was very high and no irregularity was observed at all.
   B: The surface gloss was high and irregularities were hardly observed.
   C: Slight wavy irregularities were observed on the surfaces.
   D: Prominent wavy irregularities were observed on the surfaces.

(8) Coating performance

A film was cut out at an arbitrary spot into a size of 200 mm × 300 mm to prepare a sample. Then, using an applicator, the surface of the thus obtained sample (in the case of a laminated film having layers A and B, the side of the layer B) was coated with UT-TCI-1 manufactured by Kyoeisha Chemical Co., Ltd. The coating performance was evaluated based on the following criteria.

   A: No irregularity was generated in the coating and the coating performance was good.
   B: Hardly any irregularities were generated in the coating and there was no problem in the coating performance.
   C: Slight irregularities were generated in the coating; however, the extent thereof was not problematic from a practical standpoint.
   D: Prominent irregularities were generated in the coating.

(9) Formability

A film was cut out at an arbitrary spot into a size of 200 mm × 300 mm to prepare a sample. Using an applicator, 892L manufactured by Japan Chemical Industries Co., Ltd. was coated onto the surface of the thus obtained sample (in the case of a laminated film having layers A and B, the side of the layer A) and then dried at 80°C for 10 minutes to form an adhesion layer having a film thickness of 20μ m. The thus obtained adhesion layer-laminated film was heated to a temperature of 120°C using a far-infrared heater at 400°C and then subjected to vacuum-compression molding (compression pressure: 0.2 Ma) along a polypropylene-made resin molding frame heated to 50°C (bottom diameter: 150 mm) to obtain a laminate of film/adhesion layer/polypropylene-made resin molding frame. For the thus obtained laminate, the condition of the film formed on the molding frame (contraction ratio: mold height/bottom diameter) was evaluate based on the following criteria. The satisfactory levels are S, A, B and C.

S: The film was molded at a contraction ratio of not lower than 1.0.
A: The film was molded at a contraction ratio of 0.9 or higher to less than 1.0.
B: The film was molded at a contraction ratio of 0.8 or higher to less than 0.9.
C: The film was molded at a contraction ratio of 0.7 or higher to less than 0.8.
D: The followability along the frame was poor and the film could not be molded into a shape having a contraction ratio of 0.7.

(10) Dimensional stability

A film was cut out into a rectangle of 50 mm in length and 4 mm in width in an arbitrary direction and the direction perpendicular thereto to prepare a sample. Then, using a thermomechanical analyzer (TMA EXSTAR6000, manufactured by SEIKO Instruments Inc.), the thus obtained sample was heated under the following conditions. In the process of heating, the dimensional stability was evaluated in terms of the temperature at which the rate of dimensional change exceeded 1% in accordance with the following criteria.

Gauge length: 15 mm, Load: 19.6 mN, Heating rate: 5°C/min
Measuring temperature range: 25 to 220°C

$$\text{Rate of dimensional change (\%)} = \{|\text{Gauge length (mm)} - \text{Length of retained film (mm)}|/\text{Gauge length (mm)}\} \times 100$$

A: 100°C or higher
B: 90°C or higher and lower than 100°C
C: 80°C or higher and lower than 90°C
D: lower than 80°C

(11) Mold-releasing property

A film was cut out at an arbitrary spot into a size of 200 mm $\times$ 300 mm to prepare a sample. Using an applicator, UF-TCI-1 manufactured by Kyoeisha Chemical Co., Ltd. was coated onto the surface of the thus obtained sample (in the case of a laminated film having layers A and B, the side of the layer B) and then dried at 80°C for 10 minutes to form a clear coat layer having a film thickness of 50 $\mu$m. Further, on this clear coat layer, an acryl/urethane-based silver ink was coated using an applicator and then dried at 80°C for 10 minutes to form a decoration layer having a film thickness 30 $\mu$m. Then, using an applicator, 892L manufactured by Japan Chemical Industries Co., Ltd. was further coated onto the thus formed decoration layer and dried at 80°C for 10 minutes to form an adhesion layer having a film thickness of 20 $\mu$m. In this manner, a molding transfer foil was prepared.

Using the thus obtained molding transfer foil, vacuum-compression molding was performed in the same manner as in the above-described (9) to obtain a laminate of film for molding/clear coat layer/decoration layer/adhesion layer/ polypropylene molding frame. The thus obtained laminate was then irradiated with ultraviolet light at an irradiation intensity of 2,000 mJ/cm$^2$ to cure the coating agents. From the resulting laminate, a sample was cut out in an arbitrary direction into a rectangle of 100 mm in length and 10 mm in width. After partially detaching the film for molding and the clear coat layer of the thus obtained sample, using a tensile tester (TENSILON UCT-100, manufactured by Orientec Co., Ltd.), the sample was pinched with a chuck on each side of the film for molding and the clear coat layer (clear coat layer/decoration layer/adhesion layer/polypropylene-made resin molding frame) and then subjected to a 180° peeling test. The average load value at the time of peeling was determined and the mold-releasing property was evaluated based on the criteria described below.

It is noted here that the peeing test was performed at an initial chuck distance of 100 mm, a tensile rate of 3 00 mm/min and a temperature of 25°C in each of an arbitrary direction of the film and the direction perpendicular thereto. A total of five measurements were performed for each sample in each direction and the mold-releasing property was evaluated in terms of the average value thereof.

A: 0 N/10 mm to less than 0.2 N/10 mm
B: 0.2 N/10 mm to less than 0.5 N/10 mm
C: 0.4 N/10 mm to less than 1 N/10 mm
D: 1 N/10 mm or higher

(12) Tear propagation resistance

A sample was cut out into a size of 75 mm × 63 mm in each of an arbitrary direction of a film and the direction perpendicular thereto. The tear propagation resistance was measured using a heavy-load tearing tester (manufactured by Toyo Seiki Seisaku-sho, Ltd.) in accordance with JIS K-7128-2-1998. At a position in the center of the 73-mm side of the sample, a 20-mm deep cut was made from the edge and the value indicated when the remaining 43 mm was torn was recorded. The tearing strength was defined as a value obtained by dividing the tearing force (N), which was determined from the indicated value, with the film thickness (mm). It is noted here that a total of ten measurements were performed in each direction and the average thereof was calculated.

(13) Gloss value

In accordance with the method prescribed in JIS Z-8741-1997, the 60° specular glossiness was measured using a digital variable-angle glossmeter (UGV-5D, manufactured by Suga Test Instruments Co., Ltd.). The measurement was performed five times and the average thereof excluding the maximum and minimum values was defined as the gloss value.

(14) Tearing resistance

In the same manner as in the above-described (11), a molding transfer foil was prepared, molded at a contraction ratio of 0.7 and then irradiated with ultraviolet light. Subsequently, the film for molding was peeled from the transfer molded part by hand. Here, the peeled part was between the film for molding and the clear coat layer of the transfer molded part. The same operations were performed 10 times and the tearing resistance was evaluated in terms of the number of times when the film for molding was torn and thus was not detached from the transfer molded part at once.

S : none
A: once
B: twice
C: three times
D: four or more times

(15) Surface roughness (Ra) of casting roll

An 80 μm-thick triacetyl cellulose film (BIODEN RFA triacetyl cellulose/solvent: methyl acetate) was pressed onto the surface of a casting roll using a press roller at a line pressure of 9.8 N/cm to transfer the surface profile of the casting roll to the triacetyl cellulose film. The solvent was then dried at room temperature to obtain a replica sample as a measurement sample.
For the surface of the thus obtained measurement sample onto which the surface profile of the casting roll was transferred, the surface roughness was measured using a surface roughness meter (SE4000, manufactured by Kosaka Laboratory Ltd.). The measurement was performed under the following conditions: stylus tip radius = 0.5 μm, measuring force = 100 μN, measurement length = 1 mm, lower cut-off = 0.200 mm and higher cut-off = 0.000 mm; and the arithmetic mean deviation of the profile (Ra) was determined in accordance with JIS B-0601-2001.

(Resins and additives used in Examples)

The resins and additives that were used in Examples and Comparative Examples are as follows.

(Cyclic olefin polymer A)

TOPAS (registered trademark) 8007F-04 manufactured by Polyplastics Co., Ltd. was employed.

(Cyclic olefin polymer B)

TOPAS (registered trademark) 6013F-04 manufactured by Polyplastics Co., Ltd. was employed.

(Cyclic olefin polymer C)

TOPAS (registered trademark) 9506F-04 manufactured by Polyplastics Co., Ltd. was employed.

(Polyethylene-based resin)

EVOLUE (registered trademark) SP2540 manufactured by Prime Polymer Co., Ltd. was employed.
*indicated as "PE" in Tables

(Polypropylene-based resin)

P204 manufactured by Prime Polymer Co., Ltd. was employed.
* indicated as "PP" in Tables

(Zinc stearate)

Zinc stearate manufactured by Nacalai Tesque, Inc. was employed.

(Calcium stearate)

Calcium stearate manufactured by Nacalai Tesque, Inc. was employed.

(Antioxidant)

IRGANOX 1010 manufactured by Ciba Specialty Chemicals K.K. was employed.

(Example 1)

A monolayer constitution of layer A was adopted. The resins were mixed in accordance with the composition shown in Table 1 and the resulting resin mixture was fed to a uniaxial extrude (L/D = 28). Here, the "L/D" is a value obtained by dividing the effective length of screw (L) with the screw diameter (D). The term "effective length of screw (L)" refers to the length of the screw between the point where the cut of the groove begins below the hopper and the tip of the screw. The resin mixture was melted at a feeding section temperature of 220°C and a subsequent temperature of 230°C and then passed through a leaf disk filter having a filtration accuracy of 30 $\mu$m. Thereafter, the resulting resin mixture was extruded from a T-die (die clearance: 0.4 mm) onto a mirror-finished drum having a controlled temperature of 40°C (surface roughness: 0.2 s) in the form of a sheet. In this process, the casting position was off-aligned with the top of the drum by 10° in the direction of the drum rotation and the resin mixture was adhered onto the cooling drum by electrostatic casting using a wire electrode of 0.1 mm in diameter. In this manner, a 100 $\mu$m-thick film for molding was obtained.

(Example 2)

A monolayer constitution of layer A was adopted. A 100 $\mu$m-thick film for molding was obtained in the same manner as in Example 1, except that the composition was changed as shown in Table 1.
As compared to Example 1, since the layer A had a higher glass transition temperature, the storage elastic modulus at 120°C was greater; however, the formability was the same. Meanwhile, since the layer A had a higher glass transition temperature, the storage elastic modulus at 75°C was greater and superior dimensional stability and mold-releasing property were attained.

(Example 3)

A monolayer constitution of layer A was adopted. A 100 $\mu$m-thick film for molding was obtained in the same manner as in Example 1, except that the composition was changed as shown in Table 1.
As compared to Example 2, since the layer A had an even higher glass transition temperature, the storage elastic modulus at 120°C was greater and the formability was evaluated to be inferior. Meanwhile, since the layer A had an even higher glass transition temperature, the storage elastic modulus at 75°C was greater and superior dimensional stability and mold-releasing property were attained.

(Example 4)

A monolayer constitution of layer A was adopted. A 100 μm-thick film for molding was obtained in the same manner as in Example 1, except that the composition was changed as shown in Table 2.
As compared to Example 3, since the layer A had an even higher glass transition temperature, the storage elastic modulus at 120°C was greater; however, the formability was the same. Further, since the layer A had a higher glass transition temperature, the storage elastic modulus at 75°C was greater; however, the dimensional stability and the mold-releasing property were the same.

(Example 5)

A monolayer constitution of layer A was adopted. A 100 μm-thick film for molding was obtained in the same manner as in Example 1, except that the composition was changed as shown in Table 2.
As compared to Example 4, since the layer A had an even higher glass transition temperature, the storage elastic modulus at 120°C was greater and the formability was evaluated to be inferior. Meanwhile, since the layer A had a higher glass transition temperature, the storage elastic modulus at 75°C was greater; however, the dimensional stability and the mold-releasing property were the same.

(Example 6)

A monolayer constitution of layer A was adopted. A 100 μm thick film or molding was obtained in the same manner as in Example 1, except that the composition was changed as shown in Table 2.
As compared to Example 5, since the layer A had an even higher glass transition temperature, the storage elastic modulus at 120°C was greater and the formability was evaluated to be inferior. Meanwhile, since the layer A had a higher glass transition temperature, the storage elastic modulus at 75°C was greater; however, the dimensional stability and the mold-releasing property were the same.

(Example 7)

A monolayer constitution of layer A was adopted. A 100 μm-thick film for molding was obtained in the same manner as in Example 1, except that the composition was changed as shown in Table 3.
As compared to Example 1, since the layer A had a higher glass transition temperature, the storage elastic modulus at 120°C was greater and the formability was evaluated to be inferior. Meanwhile, since the layer A had a higher glass transition temperature, the storage elastic modulus at 75°C was greater and superior dimensional stability and mold-releasing property were attained.
Further, as compared to Example 1, since the layer A had an increased content of the polyethylene-based resin, wavy irregularities were more likely to be generated on the film surfaces, resulting in inferior appearance of the surfaces. Meanwhile, since the layer A had an increased content of the polyethylene-based resin, the speck-inhibiting effect attained by a reduction in the shearing stress in the extrusion step was higher, resulting in superior quality.

(Example 8)

A monolayer constitution of layer A was adopted. A 100 μm-thick film for molding was obtained in the same manner as in Example 1, except that the composition was changed as shown in Table 3.
As compared to Example 4 where the glass transition temperature of the layer A was the same, since the layer A contained no polyethylene-based resin, the speck-inhibiting effect attained by a reduction in the shearing stress in the extrusion step was lower, resulting in inferior quality. Meanwhile, since the layer A contained no polyethylene-based resin, wavy irregularities were less likely to be generated on the film surfaces, resulting in superior appearance of the surfaces.

(Example 9)

A monolayer constitution of layer A was adopted. A 100 μm-thick film for molding was obtained in the same manner as in Example 1, except that the composition was changed as shown in Table 3.

As compared to Example 8, since the layer A contained zinc stearate, due to the speck-inhibiting effect attained by improved lubricity of the cyclic olefin polymer composition in the extrusion step, the quality of the film was superior. Further, as compared to Example 4 where the glass transition temperature of the layer A was the same, since the layer A contained no polyethylene-based resin, wavy irregularities were less likely to be generated on the film surfaces, resulting in superior appearance of the surfaces. Moreover, since the layer A contained zinc stearate, due to the speck-inhibiting effect attained by improved lubricity of the cyclic olefin polymer composition in the extrusion step, the quality of the film was superior.

(Example 10)

A three-layer constitution of layer B/layer A/layer B was adopted. The compositions of the respective layers were as shown in Table 4. The mixtures of the respective compositions were each fed to a uniaxial extruder (L/D = 28) and melted at a feeding section temperature of 220°C and a subsequent temperature of 230°C. The resulting mixtures were then each passed through a leaf disk filter having a filtration accuracy of 30 $\mu$m. Thereafter, in a feeding block arranged above a die, the mixtures were laminated such that a laminate of layer B/layer A/layer B (see Table for thickness ratio) was attained, and the thus obtained laminate was extruded from a T-die (die clearance: 0.4 mm) onto a mirror-finished drum having a controlled temperature of 40°C (surface roughness: 0.2 s) in the form of a sheet. In this process, the casting position was off-aligned with the top of the drum by 10° in the direction of the drum rotation and the laminate was adhered onto the cooling drum by electrostatic casting using a wire electrode of 0.1 mm in diameter. In this manner, a 100 $\mu$m-thick film for molding was obtained.
As compared to Example 1, since the surface layer (layer B) contained no polyethylene-based resin, due to the speck-inhibiting effect attained by improved lubricity of the cyclic olefin polymer composition in the extrusion step, the quality of the film was superior. In addition, since the surface layer (layer B) contained no polyethylene-based resin, wavy irregularities were less likely to be generated on the film surfaces, resulting in superior appearance of the surfaces. Furthermore, as compared to Example 1, although the layer A had the same glass transition temperature of 80°C as in Example 1, since the film had a laminated constitution of layer B/layer A/layer B and the surface layer (layer B) had a glass transition temperature higher than 80°C, the storage elastic modulus at 75°C was greater and superior dimensional stability and mold-releasing property were attained. Meanwhile, since the surface layer (layer B) had a glass transition temperature higher than 80°C, the storage elastic modulus at 120°C was also greater; however, the formability was the same.

(Example 11)

A three-layer constitution of layer B/layer A/layer B was adopted. A 100 $\mu$m-thick film for molding was obtained in the same manner as in Example 10, except that the compositions of the respective layers were changed as shown in Table 4.
As compared to Example 10, since the surface layer (layer B) had a higher glass transition temperature, the storage elastic modulus at 75°C was greater and superior dimensional stability and mold-releasing property were attained. Meanwhile, since the surface layer (layer B) had a higher glass transition temperature, the storage elastic modulus at 120°C was also greater; however, the formability was the same.

(Example 12)

A three-layer constitution of layer B/layer A/layer B was adopted. A 100 $\mu$m-thick film for molding was obtained in the same manner as in Example 10, except that the compositions of the respective layers were changed as shown in Table 4.
As compared to Example 11, since the surface layer (layer B) had an even higher glass transition temperature, the storage elastic modulus at 75°C was greater; however, the dimensional stability and the mold-releasing property were the same. Further, since the surface layer (layer B) had an even higher glass transition temperature, the storage elastic modulus at 120°C was also greater; however, the formability was the same.

(Example 13)

A three-layer constitution of layer B/layer A/layer B was adopted. A 100 $\mu$m-thick film for molding was obtained in the same manner as in Example 10, except that the compositions of the respective layers were changed as shown in Table 5.
As compared to Example 12, since the surface layer (layer B) had an even higher glass transition temperature, the storage elastic modulus at 75°C was greater; however, the dimensional stability and the mold-releasing property were the same. Further, since the surface layer (layer B) had an even higher glass transition temperature, the storage elastic modulus at 120°C was also greater; however, the formability was the same.

(Example 14)

A three-layer constitution of layer B/layer A/layer B was adopted. A 100 $\mu$m-thick film for molding was obtained in the same manner as in Example 10, except that the compositions of the respective layers were changed as shown in Table 5.
As compared to Example 13, since the surface layer (layer B) had an even higher glass transition temperature, the storage elastic modulus at 75°C was greater; however, the dimensional stability and the mold-releasing property were the same. Meanwhile, since the surface layer (layer B) had an even higher glass transition temperature, the storage elastic modulus at 120°C became greater and the formability was evaluated to be inferior.

(Example 15)

A three-layer constitution of layer B/layer A/layer B was adopted. A 100 $\mu$m-thick film for molding was obtained in the same manner as in Example 10, except that the compositions of the respective layers were changed as shown in Table 5.
As compared to Example 11 where the glass transition temperature of the layer B was the same, since the middle layer (layer A) had a higher glass transition temperature, the storage elastic modulus at 75°C was greater; however, the dimensional stability and the mold-releasing property were the same. Further, since the middle layer (layer A) had a higher glass transition temperature, the storage elastic modulus at 120°C was greater; however, the formability was the same.

(Example 16)

A three-layer constitution of layer B/layer A/layer B was adopted. A 100 $\mu$m-thick film for molding was obtained in the same manner as in Example 10, except that the compositions of the respective layers were changed as shown in Table 6.
As compared to Example 12, the polyethylene-based resin of the layer A was changed to a polypropylene-based resin. The respective properties were evaluated to be the same as in Example 12.

(Example 17)

A three-layer constitution of layer B/layer A/layer B was adopted. A 100 $\mu$m-thick film for molding was obtained in the same manner as in Example 10, except that the compositions of the respective layers were changed as shown in Table 6.
As compared to Example 12, zinc stearate of the layer B was changed to calcium stearate. The respective properties were evaluated to be the same as in Example 12.

(Example 18)

A three-layer constitution of layer B/layer A/layer B was adopted. A 100 $\mu$m-thick film for molding was obtained in the same manner as in Example 10, except that the compositions of the respective layers were changed as shown in Table 6.
As compared to Example 17, the thickness ratio (layer B/layer A) was made smaller. The respective properties were evaluated to be the same as in Example 17.

(Example 19)

A bilayer constitution of layer B/layer A was adopted. A 100 $\mu$m-thick film for molding was obtained in the same manner as in Example 10, except that the compositions of the respective layers were changed as shown in Table 7.
As compared to Example 18, the layer constitution was changed from the three-layer constitution of layer A/layer B/layer A to a bilayer constitution of layer B/layer A. The respective properties were evaluated to be the same as in Example 18.

(Example-20)

A three-layer constitution of layer B/layer A/layer B was adopted. A 150 $\mu$m-thick film for molding was obtained in the same manner as in Example 10, except that the compositions of the respective layers were changed as shown in Table 7.
As compared to Example 18, while keeping the thickness ratio the same, the thicknesses of the layers A and B were increased. The respective properties were evaluated to be the same as in Example 18.

(Example 21)

A three-layer constitution of layer B/layer A/layer B was adopted. A 100 $\mu$m-thick film for molding was obtained in the same manner as in Example 10, except that the compositions of the respective layers were changed as shown in Table 7.
As compared to Example 12, zinc stearate of the layer B was changed to an antioxidant. The respective properties were evaluated to be the same as in Example 12.

(Example 22)

A three-layer constitution of layer B/layer A/layer B was adopted. The compositions of the respective layers were as shown in Table 8. The mixtures of the respective compositions were each fed to a uniaxial extruder (L/D = 28) and melted at a feeding section temperature of 220°C and a subsequent temperature of 230°C. The resulting mixtures were then each passed through a leaf disk filter having a filtration accuracy of 30 $\mu$m. Thereafter, in a feeding block arranged above a die, the mixtures were laminated such that a laminate of layer B/layer A/layer B (see Table for thickness ratio) was attained, and the thus obtained laminate was extruded from a T-die (die clearance: 0.4 mm) onto a mirror-finished drum having a controlled temperature of 40°C (surface roughness: 0.2 s) in the form of a sheet. In this process, the casting position was aligned with the top of the drum and the laminate was adhered onto the cooling drum by electrostatic casting using a wire electrode of 0.1 mm in diameter. In this manner, a 100 $\mu$m-thick film for molding was obtained.
As compared to Example 11, since the casting position was changed to the top of the drum from the one which was off-aligned by 10° in the direction of the drum rotation, the thickness variation of the thus obtained film became larger, resulting in inferior coating performance.

(Example 23)

A three-layer constitution of layer B/layer A/layer B was adopted. A 100 $\mu$m-thick film for molding was obtained in the same manner as in Example 22, except that the die clearance of the T-die was changed to 0.8 mm.
As compared to Example 22, since the die clearance was increased, the thickness variation of the thus obtained film became larger, resulting in inferior coating performance.

(Example 24)

A three-layer constitution of layer B/layer A/layer B was adopted. A 100 $\mu$m-thick film for molding was obtained in the same manner as in Example 22, except that the die clearance of the T-die was changed to 0.8 mm and the temperature of the mirror-finished drum was controlled at 25°C. In other words, a 100 $\mu$m-thick film for molding was obtained in the same manner as in Example 23, except that the temperature of the mirror-finished drum was controlled at 25°C.
As compared to Example 22, since the casting temperature was made lower, the thickness variation of the thus obtained film became larger, resulting in inferior coating performance. In addition, as compared to Example 22, since the thickness variation of the film became larger and the tensile elongation at break at 120°C was reduced, the formability was inferior.

(Comparative Example 1)

A monolayer constitution of layer A was adopted. A 100 $\mu$m-thick film for molding was obtained in the same manner as in Example 1, except that the composition was changed as shown in Table 9.
As compared to Example 1, since the layer A had a glass transition temperature of lower than 80°C and the storage elastic modulus at 75°C of the film was less than 1,000 MPa, the worst evaluations were given for the dimensional stability and the mold-releasing property.

(Comparative Example 2)

A monolayer constitution of layer A was adopted. A 100 $\mu$m-thick film for molding was obtained in the same manner as in Example 1, except that the composition was changed as shown in Table 9.
As compared to Example 6, since the layer A had a glass transition temperature of higher than 120°C and the storage elastic modulus at 120°C of the film was greater than 100 MPa, the worst evaluation was given for the formability.

(Comparative Example 3)

A three-layer constitution of layer B/layer A/layer B was adopted. A 100 $\mu$m-thick film for molding was obtained in the same manner as in Example 10, except that the compositions of the respective layers were changed as shown in Table 9.
As compared to Example 1, the total thickness of the layers having a glass transition temperature of 80°C or higher was less than 50% with respect to the total film thickness and the storage elastic modulus at 75°C was less than 1,000 MPa, the worst evaluations were given for the dimensional stability and the mold-releasing property. In addition, since the surface layer (layer B) contained neither a polyethylene-based resin nor a fatty acid metal salt, the worst evaluation was given for the quality.

(Comparative Example 4)

A three-layer constitution of layer B/layer A/layer B was adopted. A 100 $\mu$m-thick film for molding was obtained in the same manner as in Example 10, except that the compositions of the respective layers were changed as shown in Table 10.
As compared to Example 15 and the like, since the middle layer (layer A) and the surface layer (layer B) both had a glass transition temperature of higher than 120°C and the storage elastic modulus at 120°C of the thus obtained film was greater than 100 MPa, the worst evaluation was given for the formability.

(Comparative Example 5)

A monolayer constitution of layer A was adopted. A 100 $\mu$m-thick film for molding was obtained in the same manner as in Example 1, except that the composition of the respective layers was changed as shown in Table 10.
Since the cyclic olefin polymer content in the layer A was less than 50% by mass and the storage elastic modulus at 75°C was less than 1,000 MPa, the worst evaluations were given for the appearance of surfaces and the dimensional stability.

(Reference Example 1)

A three-layer constitution of layer B/layer A/layer B was adopted. The compositions of the respective layers were as shown in Table 11. The mixtures of the respective compositions were each fed to a uniaxial extruder (L/D = 28) and melted at a feeding section temperature of 220°C and a subsequent temperature of 230°C. The resulting mixtures were then each passed through a leaf disk filter having a filtration accuracy of 30 $\mu$m. Thereafter, in a feeding block arranged above a die, the mixtures were laminated such that a laminate of layer B/layer A/layer B (see Table for thickness ratio) was attained, and the thus obtained laminate was extruded from a T-die (die clearance: 0.4 mm) onto a mirror-finished casting roll having a controlled temperature of 40°C (surface roughness: 0.2 s) in the form of a sheet. In this process, the casting position was off-aligned with the top of the drum by 10° in the direction of the rotation of the casting roll and the laminate was adhered onto the casting roll by electrostatic casting using a wire electrode of 0.1 mm in diameter. In this manner, a 100 $\mu$m-thick film for molding was obtained.

(Reference Example 2)

A three-layer constitution of layer B/layer A/layer B was adopted. A film for molding was obtained in the same manner as in Reference Example 1, except that electrostatic casting was not performed in the production of the film and the film was nipped with a rubber roll on the mirror-finished casting roll.
As compared to Reference Example 1, since the film was nipped with a rubber roll, the gloss value of the surface on the non-casting roll side was reduced; however, the respective properties were evaluated to be the same as in Reference Example 1.

(Reference Example 3)

A three-layer constitution of layer B/layer A/layer B was adopted. A film for molding was obtained in the same manner as in Reference Example 2, except that the surface roughness of the casting roll was changed to 0.5 s. As compared to Reference Example 2, since the surface roughness of the casting roll was greater, the gloss value of the surface on the casting roll side was reduced; however, the respective properties were evaluated to be the same as in Reference Example 2.

(Reference Example 4)

A three-layer constitution of layer B/layer A/layer B was adopted. A film for molding was obtained in the same manner as in Reference Example 2, except that the surface roughness of the casting roll was changed to 0.7 s. As compared to Reference Example 3, since the surface roughness of the casting roll was even greater, the gloss value of the surface on the casting roll side was reduced, resulting in inferior appearance of surfaces.

(Reference Example 5)

A three-layer constitution of layer B/layer A/layer B was adopted. A film for molding was obtained in the same manner as in Reference Example 1, except that the compositions were changed as shown in Table 13. As compared to Reference Example 1, since the content of the polyethylene-based resin in the middle layer (layer A) was increased, the tensile elongation at break at 120°C was reduced, resulting in inferior formability. Meanwhile, since the tear propagation resistance was greater, superior tearing resistance was attained.

(Reference Example 6)

A three-layer constitution of layer B/layer A/layer B was adopted. A film for molding was obtained in the same manner as in Reference Example 1, except that the thickness ratio was changed as shown in Table 13. As compared to Reference Example 1, since the layer A having a low glass transition temperature was thicker and the layer B having a high glass transition temperature was thinner, the tensile elongation at break at 120°C was increased; however, the respective properties were evaluated to be the same as in Reference Example 1.

(Reference Example 7)

A three-layer constitution of layer B/layer A/layer B was adopted. A film for molding was obtained in the same manner as in Reference Example 1, except that the compositions were changed as shown in Table 13. As compared to Reference Example 1, since the content of the polyethylene-based resin in the middle layer (layer A) was increased, wavy irregularities were more likely to be generated on the film surfaces, resulting in inferior appearance of the surfaces. Further, since the tensile elongation at break at 120°C was reduced, the formability became inferior. Meanwhile, since the tear propagation resistance was greater, superior tearing resistance was attained.

(Reference Example 8)

A monolayer constitution of layer A was adopted. The resins were mixed in accordance with the composition shown in Table 14 and the resulting resin mixture was fed to a uniaxial extrude (L/D = 28). The resin mixture was melted at a feeding section temperature of 220°C and a subsequent temperature of 230°C and then passed through a leaf disk filter having a filtration accuracy of 30 $\mu$m. Thereafter, the resulting resin mixture was extruded from a T-die (die clearance: 0.4 mm) onto a mirror-finished casting roll having a controlled temperature of 40°C (surface roughness: 0.2 s) in the form of a sheet. In this process, the casting position was off-aligned with the top of the drum by 10° in the direction of the rotation of the casting roll and the resin mixture was adhered onto the casting roll by electrostatic casting using a wire electrode of 0.1 mm in diameter. In this manner, a 100 $\mu$m-thick film for molding was obtained. As compared to Reference Example 1, since the surface layer of the thus obtained film contained a polyethylene-based resin, wavy irregularities were more likely to be generated on the film surfaces, resulting in inferior appearance of the surfaces.

(Reference Example 9)

A monolayer constitution of layer A was adopted. A film for molding was obtained in the same manner as in Reference Example 8, except that the composition was changed as shown in Table 14.

As compared to Reference Example 8, since the content of the polyethylene-based resin in the layer A was reduced, the speck-inhibiting effect attained by a reduction in the shearing stress in the extrusion step was lower, resulting in inferior quality. Meanwhile, wavy irregularities were less likely to be generated on the film surfaces, resulting in superior appearance of the surfaces.

(Reference Example 10)

A three-layer constitution of layer B/layer A/layer B was adopted. A film for molding was obtained in the same manner as in Reference Example 1, except that the compositions were changed as shown in Table 14.
As compared to Reference Example 1, since the content of the polyethylene-based resin in the middle layer (layer A) was increased, wavy irregularities were more likely to be generated on the film surfaces, resulting in inferior appearance of the surfaces. In addition, the tensile elongation at break at 120°C was reduced, resulting in inferior formability. Meanwhile, since the tear propagation resistance was greater, superior tearing resistance was attained.

(Reference Example 11)

A monolayer constitution of layer A was adopted. A film for molding was obtained in the same manner as in Reference Example 8, except that the composition was changed as shown in Table 15.
As compared to Reference Example 8, the polyethylene-based resin of the layer A was changed to a polypropylene-based resin. The respective properties were evaluated to be the same as in Reference Example 8.

(Reference Example 12)

A three-layer constitution of layer B/layer A/layer B was adopted. A film for molding was obtained in the same manner as in Reference Example 1, except that the thicknesses of the layers were changed as shown in Table 15.
As compared to Reference Example 1, the film was thicker and the tear propagation resistance and tensile elongation at break at 120°C were increased, the respective properties were evaluated to be the same as in Reference Example 1.

(Reference Example 13)

A bilayer constitution of layer B/layer A was adopted. A film for molding was obtained in the same manner as in Reference Example 1, except that the layer constitution was changed.
As compared to Reference Example 1, although the layer constitution was changed, the respective properties were evaluated to be the same as in Reference Example 1.

(Reference Example 14)

A monolayer constitution of layer A was adopted. A film for molding was obtained in the same manner as in Reference Example 8, except that the composition was changed as shown in Table 16.
As compared to Reference Example 1, since the surface layer of the thus obtained film contained a polyethylene-based resin, wavy irregularities were more likely to be generated on the film surfaces, resulting in inferior appearance of the surfaces. In addition, since the layer A had a higher glass transition temperature, the tensile elongation at break at 120°C was reduced, resulting in inferior formability.

(Reference Example 15)

A monolayer constitution of layer A was adopted. A film for molding was obtained in the same manner as in Reference Example 8, except that the composition was changed as shown in Table 16.
As compared to Reference Example 14, since the layer A had a higher glass transition temperature, the tensile elongation at break at 120°C was reduced, resulting in inferior formability.

(Reference Example 16)

A three-layer constitution of layer B/layer A/layer B was adopted. A film for molding was obtained in the same manner as in Reference Example 1, except that the compositions were changed as shown in Table 17.
As compared to Reference Example 1, since the surface layer (layer B) had a higher glass transition temperature, the tensile elongation at break at 120°C was reduced, resulting in inferior formability.

(Reference Example 17)

A three-layer constitution of layer B/layer A/layer B was adopted. A film for molding was obtained in the same manner as in Reference Example 1, except that the compositions were changed as shown in Table 17.
As compared to Reference Example 1, the surface layer (layer B) had a lower glass transition temperature and the tensile elongation at break at 120°C was thus increased; however, the respective properties were evaluated to be the same as in Reference Example 1.

(Reference Example 18)

A monolayer constitution of layer A was adopted. A film for molding was obtained in the same manner as in Reference Example 8, except that the composition was changed as shown in Table 17.
As compared to Reference Example 8, since the surface layer (layer B) had a higher glass transition temperature, the tear propagation resistance was reduced, resulting in inferior tearing resistance. In addition, the tensile elongation at break at 120°C was reduced, resulting in inferior formability.
Further, as compared to Reference Example 8, although the content of the polyethylene-based resin in the layer A was increased, the elevated glass transition temperature of the layer A had greater effect, so that an improvement in the quality, which is a result of an improvement in the speck-inhibiting effect attained by a reduction in the shearing stress in the extrusion step, and an improvement in the tearing resistance attained by an increase in the tear propagation resistance were not observed.

(Reference Comparative Example 1)

A monolayer constitution of layer A was adopted. A film for molding was obtained in the same manner as in Reference Example 8, except that electrostatic casting was not performed in the production of the film and the film was nipped with a rubber roll on the casting roll and that the surface-roughness of the casting roll was changed to 1.2 s. Since both surfaces of the thus obtained film had a gloss value of less than 100, the appearance of surfaces was evaluated to be inferior as compared to those films of Reference Examples 1 to 18.

(Reference Comparative Example 2)

A monolayer constitution of layer A was adopted. A film for molding was obtained in the same manner as in Reference Comparative Example 1, except that the surface roughness of the casting roll was changed to 1.5 s.
Since both surfaces of the thus obtained film had a gloss value of less than 100 and the surface of the casting roll side had a lower gloss value than in Reference Comparative Example 1, the worst evaluation was given for the appearance of surfaces.

(Reference Comparative Example 3)

A monolayer constitution of layer A was adopted. A film for molding was obtained in the same manner as in Reference Example 8, except that the composition was changed as shown in Table 18. Since the layer A had a high glass transition temperature and the tear propagation resistance was less than 10 N/mm, the thus obtained film was evaluated to be inferior in both tearing resistance and formability as compared to those films of Reference Examples 1 to 18.

(Reference Comparative Example 4)

A monolayer constitution of layer A was adopted. A film for molding was obtained in the same manner as in Reference Example 8, except that the composition was changed as shown in Table 19. Since the layer A had a high glass transition temperature and the tear propagation resistance was less than 10 N/mm and lower than that of Reference Comparative Example 3, the worst evaluations were given for the tearing resistance and the formability.

(Reference Comparative Example 5)

A monolayer constitution of layer A was adopted. A film for molding was obtained in the same manner as in Reference Example 8, except that the composition was changed as shown in Table 19. Since the content of the cyclic polyolefin-based resin in the layer A was less than 50% by mass and that of the polypropylene-based resin was higher than 50% by mass, the surface on the casting roll side and the surface on the non-casting roll side both had a reduced gloss value. In addition, after the film was molded, due to the effect of the polypropylene-based resin, the appearance of surfaces became inferior as compared to those films of Reference Examples 1 to 18.

[Table 1]

| | | | Example 1 | Example 2 | Example 3 |
|---|---|---|---|---|---|
| Constitution | | Layer constitution | Layer A | Layer A | Layer A |
| | | Thickness (µm) | 100 | 100 | 100 |
| | | Thickness ratio (Layer B/Layer A) | - | - | - |
| Layer A | | Composition (% by mass) | Cyclic olefin polymer A (95% by mass) <br><br> PE (5% by mass) | Cyclic olefin polymer A (85% by mass) Cyclic olefin polymer B (10% by mass) PE (5% by mass) | Cyclic olefin polymer A (75% by mass) Cyclic olefin polymer B (20% by mass) PE (5% by mass) |
| | | Glass transition temperature (°C) | 80 | 86 | 91 |
| Layer B | | Composition (% by mass) | - | - | - |
| | | Glass transition temperature (°C) | - | - | - |
| Film composition | | Cyclic olefin polymer (% by mass) | 95% by mass | 95% by mass | 95% by mass |
| | | Antioxidant (% by mass) | - | - | - |
| | | Fatty acid metal salt (% by mass) | - | - | - |
| Film property | | Storage elastic modulus at 75°C (MPa) | 1040/1084 | 1174/1196 | 1295/1312 |
| | | Storage elastic modulus at 120°C (MPa) | 2.5/2.8 | 4.8/4.9 | 5.6/6.2 |
| | | Tensile elongation at break at 120°C (%) | 1510/1423 | 1267/1241 | 985/966 |
| | | Thickness variation | 4.2 | 3.9 | 3.5 |
| Evaluation | | Quality | B | B | B |
| | | Appearance of surfaces | B | B | B |
| | | Coating performance | A | A | A |
| | | Formability | S | S | A |
| | | Dimensional stability | C | B | A |
| | | Mold-releasing property | C | B | A |

[Table 2]

| | | Example 4 | Example 5 | Example 6 |
|---|---|---|---|---|
| Constitution | Layer constitution | Layer A | Layer A | Layer A |
| | Thickness ($\mu$m) | 100 | 100 | 100 |
| | Thickness ratio (Layer B/Layer A) | - | - | - |
| Layer A | Composition (% by mass) | Cyclic olefin polymer A (65% by mass) Cyclic olefin polymer B (30% by mass) PE (5% by mass) | Cyclic olefin polymer A (55% by mass) Cyclic olefin polymer B (40% by mass) PE (5% by mass) | Cyclic olefin polymer A (35% by mass) Cyclic olefin polymer B (60% by mass) PE (5% by mass) |
| | Glass transition temperature (°C) | 98 | 106 | 112 |
| Layer B | Composition (% by mass) | - | - | - |
| | Glass transition temperature (°C) | - | - | - |
| Film composition | Cyclic olefin polymer (% by mass) | 95% by mass | 95% by mass | 95% by mass |
| | Antioxidant (% by mass) | - | - | - |
| | Fatty acid metal salt (% by mass) | - | - | - |
| Film property | Storage elastic modulus at 75°C (MPa) | 1548/1563 | 1765/1774 | 1896/1922 |
| | Storage elastic modulus at 120°C (MPa) | 12.5/13.2 | 24.8/26.3 | 58.6/59.3 |
| | Tensile elongation at break at 120°C (%) | 824/811 | 754/721 | 522/511 |
| | Thickness variation | 3.4 | 3.2 | 3.0 |
| Evaluation | Quality | B | B | B |
| | Appearance of surfaces | B | B | B |
| | Coating performance | A | A | A |
| | Formability | A | B | C |
| | Dimensional stability | A | A | A |
| | Mold-releasing property | A | A | A |

[Table 3]

| | | Example 7 | Example 8 | Example 9 |
|---|---|---|---|---|
| Constitution | Layer constitution | Layer A | Layer A | Layer A |
| | Thickness (μm) | 100 | 100 | 100 |
| | Thickness ratio (Layer B/Layer A) | - | - | - |
| Layer A | Composition (% by mass) | Cyclic olefin polymer A (45% by mass) Cyclic olefin polymer B (30% by mass) PE (25% by mass) | Cyclic olefin polymer A (70% by mass) Cyclic olefin polymer B (30% by mass) | Cyclic olefin polymer A (69.7% by mass) Cyclic olefin polymer B (30% by mass) Zinc stearate (0.3% by mass) |
| | Glass transition temperature (°C) | 94 | 98 | 98 |
| Layer B | Composition (% by mass) | - | - | - |
| | Glass transition temperature (°C) | - | - | - |
| Film composition | Cyclic olefin polymer (% by mass) | 75% by mass | 100% by mass | 99.7% by mass |
| | Antioxidant (% by mass) | - | - | - |
| | Fatty acid metal salt (% by mass) | - | - | 0.3% by mass |
| Film property | Storage elastic modulus at 75°C (MPa) | 1256/1284 | 1566/1586 | 1560/1586 |
| | Storage elastic modulus at 120°C (MPa) | 14.3/15.9 | 11.8/12.9 | 11.9/12.8 |
| | Tensile elongation at break at 120°C (%) | 846/821 | 820/808 | 822/806 |
| | Thickness variation | 4.2 | 3.2 | 3.0 |
| Evaluation | Quality | A | C | A |
| | Appearance of surfaces | C | A | A |
| | Coating performance | A | A | A |
| | Formability | A | A | A |
| | Dimensional stability | A | A | A |
| | Mold-releasing property | A | A | A |

[Table 4]

| | | Example 10 | Example 11 | Example 12 |
|---|---|---|---|---|
| Constitution | Layer constitution | Layer B/Layer A/ Layer B | Layer B/Layer A/ Layer B | Layer B/Layer A/Layer B |
| | Thickness ($\mu$m) | 20/60/20 | 20/60/20 | 20/60/20 |
| | Thickness ratio (Layer B/Layer A) | 0.67 | 0.67 | 0.67 |
| Layer A | Composition (% by mass) | Cyclic olefin polymer A (95% by mass) PE (5% by mass) | Cyclic olefin polymer A (95% by mass) PE (5% by mass) | Cyclic olefin polymer A (95% by mass) PE (5% by mass) |
| | Glass transition temperature (°C) | 80 | 80 | 80 |
| Layer B | Composition (% by mass) | Cyclic olefin polymer A (89.7% by mass) Cyclic olefin polymer B (10% by mass) Zinc stearate (0.3% by mass) | Cyclic olefin polymer A (79.7% by mass) Cyclic olefin polymer B (20% by mass) Zinc stearate (0.3% by mass) | Cyclic olefin polymer A (69.7% by mass) Cyclic olefin polymer B (30% by mass) Zinc stearate (0.3% by mass) |
| | Glass transition temperature (°C) | 88 | 93 | 98 |
| Film composition | Cyclic olefin polymer (% by mass) | 96.9% by mass | 96.9% by mass | 96.9% by mass |
| | Antioxidant (% by mass) | - | - | - |
| | Fatty acid metal salt (% by mass) | 0.12% by mass | 0.12% by mass | 0.12% by mass |
| Film property | Storage elastic modulus at 75°C (MPa) | 1106/1164 | 1247/1266 | 1487/1496 |
| | Storage elastic modulus at 120°C (MPa) | 4.2/4.8 | 8.8/9.4 | 11.3/13.1 |
| | Tensile elongation at break at 120°C (%) | 1421/1409 | 1210/1187 | 1124/1139 |
| | Thickness variation | 3.7 | 3.3 | 3.2 |
| Evaluation | Quality | A | A | A |
| | Appearance of surfaces | A | A | A |
| | Coating performance | A | A | A |
| | Formability | S | S | S |
| | Dimensional stability | B | A | A |
| | Mold-releasing property | B | A | A |

[Table 5]

| | | Example 13 | Example 14 | Example 15 |
|---|---|---|---|---|
| Constitution | Layer constitution | Layer B/Layer A/ Layer B | Layer B/Layer A/ Layer B | Layer B/Layer A/Layer B |
| | Thickness (μm) | 20/60/20 | 20/60/20 | 20/60/20 |
| | Thickness ratio (Layer B/Layer A) | 0.67 | 0.67 | 0.67 |
| Layer A | Composition (% by mass) | Cyclic olefin polymer A (95% by mass) PE (5% by mass) | Cyclic olefin polymer A (95% by mass) PE (5% by mass) | Cyclic olefin polymer A (85% by mass) Cyclic olefin polymer B (10% by mass) PE (5% by mass) |
| | Glass transition temperature (°C) | 80 | 80 | 87 |
| Layer B | Composition (% by mass) | Cyclic olefin polymer A (59.7% by mass) Cyclic olefin polymer B (40% by mass) Zinc stearate (0.3% by mass) | Cyclic olefin polymer A (49.7% by mass) Cyclic olefin polymer B (60% by mass) PE (5% by mass) | Cyclic olefin polymer A (79.7% by mass) Cyclic olefin polymer B (20% by mass) Zinc stearate (0.3% by mass) |
| | Glass transition temperature (°C) | 107 | 114 | 93 |
| Film composition | Cyclic olefin polymer (% by mass) | 96.9% by mass | 96.9% by mass | 96.9% by mass |
| | Antioxidant (% by mass) | - | - | - |
| | Fatty acid metal salt (% by mass) | 0.12% by mass | 0.12% by mass | 0.12% by mass |
| Film property | Storage elastic modulus at 75°C (MPa) | 1688/1710 | 1785/1723 | 1311/1367 |
| | Storage elastic modulus at 120°C (MPa) | 18.6/19.6 | 34.4/35.6 | 10.2/12.3 |
| | Tensile elongation at break at 120°C (%) | 1042/1012 | 854/821 | 1120/1106 |
| | Thickness variation | 3.0 | 2.8 | 3.3 |
| Evaluation | Quality | A | A | A |
| | Appearance of surfaces | A | B | A |
| | Coating performance | A | A | A |
| | Formability | S | A | S |
| | Dimensional stability | A | A | A |
| | Mold-releasing property | A | A | A |

[Table 6]

| | | Example 16 | Example 17 | Example 18 |
|---|---|---|---|---|
| Constitution | Layer constitution | Layer B/Layer A/ Layer B | Layer B/Layer A/ Layer B | Layer B/Layer A/Layer B |
| | Thickness (μm) | 20/60/20 | 20/60/20 | 10/80/10 |
| | Thickness ratio (Layer B/Layer A) | 0.67 | 0.67 | 0.25 |
| Layer A | Composition (% by mass) | Cyclic olefin polymer A (95% by mass) PP (5% by mass) | Cyclic olefin polymer A (95% by mass) PE (5% by mass) | Cyclic olefin polymer A (95% by mass) PE (5% by mass) |
| | Glass transition temperature (°C) | 81 | 81 | 81 |
| Layer B | Composition (% by mass) | Cyclic olefin polymer A (69.7% by mass) Cyclic olefin polymer B (30% by mass) Zinc stearate (0.3% by mass) | Cyclic olefin polymer A (69.7% by mass) Cyclic olefin polymer B (30% by mass) Calcium stearate (0.3% by mass) | Cyclic olefin polymer A (69.7% by mass) Cyclic olefin polymer B (30% by mass) Calcium stearate (0.3% by mass) |
| | Glass transition temperature (°C) | 98 | 98 | 98 |
| Film composition | Cyclic olefin polymer (% by mass) | 96.9% by mass | 96.9% by mass | 95.9% by mass |
| | Antioxidant (% by mass) | - | - | - |
| | Fatty acid metal salt (% by mass) | 0.12% by mass | 0.12% by mass | 0.06% by mass |
| Film property | Storage elastic modulus at 75°C (MPa) | 1496/1522 | 1478/1506 | 1211/1236 |
| | Storage elastic modulus at 120°C (MPa) | 12.4/13.1 | 12.2/12.8 | 10.6/11.1 |
| | Tensile elongation at break at 120°C (%) | 1106/1087 | 1097/1084 | 1304/1287 |
| | Thickness variation | 3.4 | 3.4 | 3.7 |
| Evaluation | Quality | A | A | A |
| | Appearance of surfaces | A | A | A |
| | Coating performance | A | A | A |
| | Formability | S | S | S |
| | Dimensional stability | A | A | A |
| | Mold-releasing property | A | A | A |

[Table 7]

| | | Example 19 | Example 20 | Example 21 |
|---|---|---|---|---|
| Constitution | Layer constitution | Layer B/Layer A | Layer B/Layer A/ Layer B | Layer B/Layer A/Layer B |
| | Thickness ($\mu$m) | 20/80 | 15/120/15 | 20/60/20 |
| | Thickness ratio (Layer B/Layer A) | 0.25 | 0.25 | 0.67 |
| Layer A | Composition (% by mass) | Cyclic olefin polymer A (95% by mass) PE (5% by mass) | Cyclic olefin polymer A (95% by mass) PE (5% by mass) | Cyclic olefin polymer A (95% by mass) PE (5% by mass) |
| | Glass transition temperature (°C) | 81 | 81 | 80 |
| Layer B | Composition (% by mass) | Cyclic olefin polymer A (69.7% by mass) Cyclic olefin polymer B (30% by mass) Calcium stearate (0.3% by mass) | Cyclic olefin polymer A (69.7% by mass) Cyclic olefin polymer B (30% by mass) Calcium stearate (0.3% by mass) | Cyclic olefin polymer A (69.7% by mass) Cyclic olefin polymer B (30% by mass) Antioxidant (0.3% by mass) |
| | Glass transition temperature (°C) | 98 | 98 | 98 |
| Film composition | Cyclic olefin polymer (% by mass) | 95.9% by mass | 95.9% by mass | 96.9% by mass |
| | Antioxidant (% by mass) | - | - | 0.12% by mass |
| | Fatty acid metal salt (% by mass) | 0.06% by mass | 0.06% by mass | - |
| Film property | Storage elastic modulus at 75°C (MPa) | 1218/1244 | 1224/1253 | 1487/1496 |
| | Storage elastic modulus at 120°C (MPa) | 10.5/12.3 | 10.8/11.9 | 11.3/13.1 |
| | Tensile elongation at break at 120°C (%) | 1284/1244 | 1342/1321 | 1124/1139 |
| | Thickness variation | 3.7 | 3.5 | 3.1 |
| Evaluation | Quality | A | A | A |
| | Appearance of surfaces | A | A | A |
| | Coating performance | A | A | A |
| | Formability | S | S | S |
| | Dimensional stability | A | A | A |
| | Mold-releasing property | A | A | A |

[Table 8]

| | | Example 22 | Example 23 | Example 23 |
|---|---|---|---|---|
| Constitution | Layer constitution | Layer B/Layer A/ Layer B | Layer B/Layer A/ Layer B | Layer B/Layer A/Layer B |
| | Thickness (μm) | 20/60/20 | 20/60/20 | 20/60/20 |
| | Thickness ratio (Layer B/Layer A) | 0.67 | 0.67 | 0.67 |
| Layer A | Composition (% by mass) | Cyclic olefin polymer A (95% by mass) PE (5% by mass) | Cyclic olefin polymer A (95% by mass) PE (5% by mass) | Cyclic olefin polymer A (95% by mass) PE (5% by mass) |
| | Glass transition temperature (°C) | 80 | 80 | 80 |
| Layer B | Composition (% by mass) | Cyclic olefin polymers A (79.7% by mass) Cyclic olefin polymer B (20% by mass) Zinc stearate (0.3% by mass) | Cyclic olefin polymer A (79.7% by mass) Cyclic olefin polymer B (20% by mass) Zinc stearate (0.3% by mass) | Cyclic olefin polymer A (79.7% by mass) Cyclic olefin polymer B (20% by mass) Zinc stearate (0.3% by mass) |
| | Glass transition temperature (°C) | 93 | 93 | 93 |
| Film composition | Cyclic olefin polymer (% by mass) | 96.9% by mass | 96.9% by mass | 96.9% by mass |
| | Antioxidant (% by mass) | - | - | - |
| | Fatty acid metal salt (% by mass) | 0.12% by mass | 0.12% by mass | 0.12% by mass |
| Film property | Storage elastic modulus at 75°C (MPa) | 1247/1266 | 1245/1264 | 1246/1267 |
| | Storage elastic modulus at 120°C (MPa) | 8.8/9.6 | 8.8/9.5 | 8.7/9.6 |
| | Tensile elongation at break at 120°C (%) | 1210/1187 | 1034/1022 | 984/931 |
| | Thickness variation | 5.9 | 8.6 | 12.6 |
| Evaluation | Quality | A | A | A |
| | Appearance of surfaces | A | A | A |
| | Coating performance | B | C | D |
| | Formability | S | S | A |
| | Dimensional stability | A | A | A |
| | Mold-releasing property | A | A | A |

[Table 9] ___

| | | Comparative Example 1 | Comparative Example 2 | Comparative Example 3 |
|---|---|---|---|---|
| Constitution | Layer constitution | Layer A | Layer A | Layer B/Layer A/ Layer B |
| | Thickness (μm) | 100 | 100 | 20/60/20 |
| | Thickness ratio (Layer B/Layer A) | - | - | 0.67 |
| Layer A | Composition (% by mass) | Cyclic olefin polymer A (45% by mass) Cyclic olefin polymer C (50% by mass) PE (5% by mass) | Cyclic olefin polymer A (25% by mass) Cyclic olefin polymer B (70% by mass) PE (5% by mass) | Cyclic olefin polymer A (45% by mass) Cyclic olefin polymer C (50% by mass) PE (5% by mass) |
| | Glass transition temperature (°C) | 73 | 121 | 73 |
| Layer B | Composition (% by mass) | - | - | Cyclic olefin polymer A (100% by mass) |
| | Glass transition temperature (°C) | - | - | 80 |
| Film composition | Cyclic olefin polymer (% by mass) | 95% by mass | 95% by mass | 97% by mass |
| | Antioxidant (% by mass) | - | - | - |
| | Fatty acid metal salt (% by mass) | - | - | - |
| Film property | Storage elastic modulus at 75°C (MPa) | 856/863 | 1988/2014 | 911/964 |
| | Storage elastic modulus at 120°C (MPa) | 1.3/1.4 | 227/267 | 1.8/2.2 |
| | Tensile elongation at break at 120°C (%) | 1622/1617 | 287/247 | 1603/1578 |
| | Thickness variation | 5.6 | 3.0 | 6.4 |
| Evaluation | Quality | B | B | D |
| | Appearance of surfaces | B | B | A |
| | Coating performance | B | A | A |
| | Formability | S | D | A |
| | Dimensional stability | D | A | D |
| | Mold-releasing property | D | A | D |

[Table 10]

| | | | Comparative Example 4 | Comparative Example 5 |
|---|---|---|---|---|
| Constitution | | Layer constitution | Layer B/Layer A/Layer B | Layer A |
| | | Thickness (μm) | 20/60/20 | 100 |
| | | Thickness ratio (Layer B/Layer A) | 0.67 | - |
| Layer A | | Composition (% by mass) | Cyclic olefin polymer A (25% by mass) Cyclic olefin polymer B (70% by mass) PE (5% by mass) | Cyclic olefin polymer A (35% by mass) Cyclic olefin polymer B (10% by mass) PP (55% by mass) |
| | | Glass transition temperature (°C) | 121 | 88 |
| Layer B | | Composition (% by mass) | Cyclic olefin polymer A (19.7% by mass) Cyclic olefin polymer B (80% by mass) Zinc stearate (0.3% by mass) | - |
| | | Glass transition temperature (°C) | 126 | - |
| Film composition | | Cyclic olefin polymer (% by mass) Antioxidant (% by mass) | 96.9% by mass - | 45% by mass - |
| | | Fatty acid metal salt (% by mass) | 0.12% by mass | - |
| Film property | | Storage elastic modulus at 75°C (MPa) | 2544/2632 | 614/638 |
| | | Storage elastic modulus at 120°C (MPa) | 479/532 | 44/48 |
| | | Tensile elongation at break at 120°C (%) | 219/187 | 1841/1754 |
| | | Thickness variation | 3.0 | 8.4 |
| Evaluation | | Quality | A | A |
| | | Appearance of surfaces | A | D |
| | | Coating performance | A | C |
| | | Formability | D | C |
| | | Dimensional stability | A | D |
| | | Mold-releasing property | A | A |

[Table 11]

| | | Reference Example 1 | Reference Example 2 | Reference Example 3 |
|---|---|---|---|---|
| Constitution | Layer constitution | Layer B/Layer A/ Layer B | Layer B/Layer A/Layer B | Layer B/Layer A/Layer B |
| | Thickness (μm) | 20/60/20 | 20/60/20 | 20/60/20 |
| | Thickness ratio (Layer B/Layer A) | 0.67 | 0.67 | 0.67 |
| Layer A | Composition (% by mass) | Cyclic olefin polymer A (95% by mass) PE (5% by mass) | Cyclic olefin polymer A (95% by mass) PE (5% by mass) | Cyclic olefin polymer A (95% by mass) PE (5% by mass) |
| | Glass transition temperature (°C) | 80 | 80 | 80 |
| Layer B | Composition (% by mass) | Cyclic olefin polymer A (69.7% by mass) Cyclic olefin polymer B (30% by mass) Zinc stearate (0.3% by mass) | Cyclic olefin polymer A (69.7% by mass) Cyclic olefin polymer B (30% by mass) Zinc stearate (0.3% by mass) | Cyclic olefin polymer A (69.7% by mass) Cyclic olefin polymer B (30% by mass) Zinc stearate (0.3% by mass) |
| | Glass transition temperature (°C) | 98 | 98 | 98 |
| Film composition | Cyclic olefin polymer (% by mass) | 96.9 | 96.9 | 96.9 |
| | Polyethylene-based resin and/or polypropylene-based resin (% by mass) | 3 | 3 | 3 |
| | Fatty acid metal salt (% by mass) | 0.12 | 0.12 | 0.12 |
| Film Property | Tear propagation resistance (N/mm) | 15.1/14.8 | 15.2/14.8 | 15.1/14.8 |
| | Gloss value (-) (Surface on the casting roll side/ Surface on the non-casting roll side) | 161/159 | 157/13 | 140/13 |
| | Tensile elongation at break at 120°C (%) | 1124/1139 | 1080/1076 | 1124/1139 |
| | Thickness variation | 3.2 | 3.5 | 3.5 |
| Evaluation | Quality | A | A | A |
| | Appearance of surfaces | A | A | A |
| | Tearing resistance | A | A | A |
| | Formability | S | S | S |
| | Mold-releasing property | A | A | A |

[Table 12]

| | | | Reference Example 4 |
|---|---|---|---|
| Constitution | | Layer constitution | Layer B/Layer A/Layer B |
| | | Thickness (µm) | 20/60/20 |
| | | Thickness ratio (Layer B/Layer A) | 0.67 |
| Layer A | | Composition (% by mass) | Cyclic olefin polymer A (95% by mass) PE (5% by mass) |
| | | Glass transition temperature (°C) | 80 |
| Layer B | | Composition (% by mass) | Cyclic olefin polymer A (69.7% by mass) Cyclic olefin polymer B (30% by mass) Zinc stearate (0.3% by mass) |
| | | Glass transition temperature (°C) | 98 |
| Film composition | | Cyclic olefin polymer (% by mass) | 96.9 |
| | | Polyethylene-based resin and/or polypropylene-based resin (% by mass) | 3 |
| | | Fatty acid metal salt (% by mass) | 0.12 |
| Film Property | | Tear propagation resistance (N/mm) | 15.1/14.9 |
| | | Gloss value (-) (Surface on the casting roll side/ Surface on the non-casting roll side) | 115/13 |
| | | Tensile elongation at break at 120°C (%) | 1076/1077 |
| | | Thickness variation | 3.6 |
| Evaluation | | Quality | A |
| | | Appearance of surfaces | B |
| | | Tearing resistance | A |
| | | Formability | S |
| | | Mold-releasing property | A |

[Table 13]

| | | Reference Example 5 | Reference Example 6 | Reference Example 7 |
|---|---|---|---|---|
| Constitution | Layer constitution | Layer B/Layer A/ Layer B | Layer B/Layer A/Layer B | Layer B/Layer A/ Layer B |
| | Thickness (µm) | 20/60/20 | 5/90/5 | 20/60/20 |
| | Thickness ratio (Layer B/Layer A) | 0.67 | 0.11 | 0.67 |
| Layer A | Composition (% by mass) | Cyclic olefin polymer A (90% by mass) PE (10% by mass) | Cyclic olefin polymer A (95% by mass) PE (5% by mass) | Cyclic olefin polymer A (40% by mass) PE (60% by mass) |
| | Glass transition temperature (°C) | 80 | 80 | 80 |

(continued)

| | | Reference Example 5 | Reference Example 6 | Reference Example 7 |
|---|---|---|---|---|
| Layer B | Composition (% by mass) | Cyclic olefin polymer A (69.7% by mass) Cyclic olefin polymer B (30% by mass) Zinc stearate (0.3% by mass) | Cyclic olefin polymer A (69.7% by mass) Cyclic olefin polymer B (30% by mass) Zinc stearate (0.3% by mass) | Cyclic olefin polymer A (69.7% by mass) Cyclic olefin polymer B (30% by mass) Zinc stearate (0.3% by mass) |
| | Glass transition temperature (°C) | 98 | 98 | 98 |
| Film composition | Cyclic olefin polymer (% by mass) | 96.9 | 95.5 | 63.9 |
| | Polyethylene-based resin and/or polypropylene-based resin (% by mass) | 3 | 4.5 | 36 |
| | Fatty acid metal salt (% by mass) | 0.12 | 0.03 | 0.12 |
| Film Property | Tear propagation resistance (N/mm) | 22.3/23.1 | 18.8/19.1 | 38.6/41.2 |
| | Gloss value (-) (Surface on the casting roll side/ Surface on the non-casting roll side) | 159/158 | 158/158 | 154/153 |
| | Tensile elongation at break at 120°C (%) | 962/967 | 1295/1280 | 982/984 |
| | Thickness variation | 3.4 | 3.3 | 3.9 |
| Evaluation | Quality | A | A | A |
| | Appearance of surfaces | A | A | B |
| | Tearing resistance | S | A | S |
| | Formability | A | S | B |
| | Mold-releasing property | A | A | A |

[Table 14]

| | | Reference Example 8 | Reference Example 9 | Reference Example 10 |
|---|---|---|---|---|
| Constitution | Layer constitution | Layer A | Layer A | Layer B/Layer A/ Layer B |
| | Thickness (μm) | 100 | 100 | 5/90/5 |
| | Thickness ratio (Layer B/Layer A) | - | - | 0.11 |
| Layer A | Composition (% by mass) | Cyclic olefin polymer A (95% by mass) PE (5% by mass) | Cyclic olefin polymer A (99.5% by mass) PE (0.5% by mass) | Cyclic olefin polymer A (50% by mass) PE (50% by mass) |
| | Glass transition temperature (°C) | 80 | 82 | 80 |
| Layer B | Composition (% by mass) | - | - | Cyclic olefin polymer A (69.7% by mass) Cyclic olefin polymer B (30% by mass) Zinc stearate (0.3% by mass) |
| | Glass transition temperature (°C) | - | - | 98 |
| Film composition | Cyclic olefin polymer (% by mass) | 95 | 99.5 | 55 |
| | Polyethylene-based resin and/or polypropylene-based resin (% by mass) | 5 | 0.5 | 44.9 |
| | Fatty acid metal salt (% by mass) | - | - | 0.12 |
| Film Property | Tear propagation resistance (N/mm) | 28.0/30.2 | 24.3/23.8 | 42.1/44.3 |
| | Gloss value (-) (Surface on the casting roll side/ Surface on the non-casting roll side) | 151/150 | 158/157 | 154/154 |
| | Tensile elongation at break at 120°C (%) | 1510/1423 | 1550/1561 | 740/728 |
| | Thickness variation | 4.2 | 3.0 | 3.9 |

(continued)

|  |  | Reference Example 8 | Reference Example 9 | Reference Example 10 |
|---|---|---|---|---|
| Evaluation | Quality | A | B | A |
|  | Appearance of surfaces | B | A | B |
|  | Tearing resistance | A | A | S |
|  | Formability | S | S | B |
|  | Mold-releasing property | A | A | A |

[Table 15]

|  |  | Reference Example 11 | Reference Example 12 | Reference Example 13 |
|---|---|---|---|---|
| Constitution | Layer constitution | Layer A | Layer B/Layer A/Layer B | Layer A/Layer B |
|  | Thickness (μm) | 100 | 30/90/30 | 67/33 |
|  | Thickness ratio (Layer B/Layer A) | - | 0.67 | 0.67 |
| Layer A | Composition (% by mass) | Cyclic olefin polymer A (95% by mass) PP (5% by mass) | Cyclic olefin polymer A (95% by mass) PE (5% by mass) | Cyclic olefin polymer A (95% by mass) PE (5% by mass) |
|  | Glass transition temperature (°C) | 80 | 80 | 80 |
| Layer B | Composition (% by mass) | - | Cyclic olefin polymer A (69.7% by mass) Cyclic olefin polymer B (30% by mass) Zinc stearate (0.3% by mass) | Cyclic olefin polymer A (69.7% by mass) Cyclic olefin polymer B (30% by mass) Zinc stearate (0.3% by mass) |
|  | Glass transition temperature (°C) | - | 98 | 98 |
| Film composition | Cyclic olefin polymer (% by mass) | 95 | 96.9 | 96.9 |
|  | Polyethylene-based resin and/or polypropylene-based resin (% by mass) | 5 | 3 | 3 |
|  | Fatty acid metal salt (% by mass) | - | 0.12 | 0.12 |

(continued)

| Film Property | | Reference Example 11 | Reference Example 12 | Reference Example 13 |
|---|---|---|---|---|
| Film Property | Tear propagation resistance (N/mm) | 28.0/30.2 | 25.3/25.6 | 15.3/15.1 |
| Film Property | Gloss value (-) (Surface on the casting roll side/ Surface on the non-casting roll side) | 151/151 | 161/159 | 161/159 |
| Film Property | Tensile elongation at break at 120°C (%) | 1412/1396 | 1186/1179 | 1129/1142 |
| Film Property | Thickness variation | 4.2 | 4.6 | 3.1 |
| Evaluation | Quality | A | A | A |
| Evaluation | Appearance of surfaces | B | A | A |
| Evaluation | Tearing resistance | A | A | A |
| Evaluation | Formability | S | S | S |
| Evaluation | Mold-releasing property | A | A | A |

[Table 16]

| | | Reference Example 14 | Reference Example 15 |
|---|---|---|---|
| Constitution | Layer constitution | Layer A | Layer A |
| Constitution | Thickness (μm) | 100 | 100 |
| Constitution | Thickness ratio (Layer B/ Layer A) | - | - |
| Layer A | Composition (% by mass) | Cyclic olefin polymer A (75% by mass) Cyclic olefin polymer B (20% by mass) PE (5% by mass) | Cyclic olefin polymer A (55% by mass) Cyclic olefin polymer B (40% by mass) PE (5% by mass) |
| Layer A | Glass transition temperature (°C) | 91 | 106 |
| Layer B | Composition (% by mass) | - | - |
| Layer B | Glass transition temperature (°C) | - | - |
| Film composition | Cyclic olefin polymer (% by mass) | 95 | 95 |
| Film composition | Polyethylene-based resin and/or polypropylene-based resin (% by mass) | 5 | 5 |
| Film composition | Fatty acid metal salt (% by mass) | - | - |

(continued)

| Film Property | Tear propagation resistance (N/mm) | 24.0/23.8 | 18.0/17.7 |
|---|---|---|---|
| | | Reference Example 14 | Reference Example 15 |
| Film Property | Tear propagation resistance (N/mm) | 24.0/23.8 | 18.0/17.7 |
| | Gloss value (-) (Surface on the casting roll side/ Surface on the non-casting roll side) | 153/151 | 153/151 |
| | Tensile elongation at break at 120°C (%) | 985/966 | 754/721 |
| | Thickness variation | 3.5 | 3.2 |
| Evaluation | Quality | A | A |
| | Appearance of surfaces | B | B |
| | Tearing resistance | A | A |
| | Formability | A | B |
| | Mold-releasing property | A | A |

[Table 17]

| | | Reference Example 16 | Reference Example 17 | Reference Example 18 |
|---|---|---|---|---|
| Constitution | Layer constitution | Layer B/Layer A/ Layer B | Layer B/Layer A/Layer B | Layer A |
| | Thickness (μm) | 20/60/20 | 20/60/20 | 100 |
| | Thickness ratio (Layer B/Layer A) | 0.67 | 0.67 | - |
| Layer A | Composition (% by mass) | Cyclic olefin polymer A (95% by mass) PE (5% by mass) | Cyclic olefin polymer A (95% by mass) PE (5% by mass) | Cyclic olefin polymer B (80% by mass) PE(20% by mass) |
| | Glass transition temperature (°C) | 80 | 80 | 135 |
| Layer B | Composition (% by mass) | Cyclic olefin polymer A (49.7% by mass) Cyclic olefin polymer B (60% by mass) Zinc stearate (0.3% by mass) | Cyclic olefin polymer A (89.7% by mass) Cyclic olefin polymer B (10% by mass) Zinc stearate (0.3% by mass) | - |
| | Glass transition temperature (°C) | 114 | 88 | - |

(continued)

| | | Reference Example 16 | Reference Example 17 | Reference Example 18 |
|---|---|---|---|---|
| Film composition | Cyclic olefin polymer (% by mass) | 96.9 | 96.9 | 80 |
| | Polyethylene-based resin and/or polypropylene-based resin (% by mass) | 3 | 3 | 20 |
| | Fatty acid metal salt (% by mass) | 0.12 | 0.12 | - |
| Film Property | Tear propagation resistance (N/mm) | 13.8/13.7 | 23.0/22.8 | 10.2/10.3 |
| | Gloss value (-) (Surface on the casting roll side/ Surface on the non-casting roll side) | 161/160 | 161/160 | 162/161 |
| | Tensile elongation at break at 120°C (%) | 854/821 | 1421/1409 | 320/328 |
| | Thickness variation | 2.8 | 3.7 | 2.9 |
| Evaluation | Quality | A | A | B |
| | Appearance of surfaces | A | A | A |
| | Tearing resistance | A | A | B |
| | Formability | B | S | C |
| | Mold-releasing property | A | A | A |

[Table 18]

| | | Reference Comparative Example 1 | Reference Comparative Example 2 | Reference Comparative Example 3 |
|---|---|---|---|---|
| Constitution | Layer constitution | Layer A | Layer A | Layer A |
| | Thickness (μm) | 100 | 100 | 100 |
| | Thickness ratio (Layer B/Layer A) | - | - | - |
| Layer A | Composition (% by mass) | Cyclic olefin polymer A (95% by mass) PE (5% by mass) | Cyclic olefin polymer A (95% by mass) PE (5% by mass) | Cyclic olefin polymer A (40% by mass) Cyclic olefin polymer B (60% by mass) |
| | Glass transition temperature (°C) | 80 | 80 | 114 |

(continued)

| | | Reference Comparative Example 1 | Reference Comparative Example 2 | Reference Comparative Example 3 |
|---|---|---|---|---|
| Layer B | Composition (% by mass) | - | - | - |
| | Glass transition temperature (°C) | - | - | - |
| Film composition | Cyclic olefin polymer (% by mass) | 95 | 95 | 100 |
| | Polyethylene-based resin and/or polypropylene-based resin (% by mass) | 5 | 5 | - |
| | Fatty acid metal salt (% by mass) | - | - | - |
| Film Property | Tear propagation resistance (N/mm) | 28.0/30.2 | 28.0/30.2 | 8.2/8.0 |
| | Gloss value (-) (Surface on the casting roll side/ Surface on the non-casting roll side) | 89/13 | 44/13 | 160/159 |
| | Tensile elongation at break at 120°C (%) | 1510/1423 | 1510/1423 | 510/498 |
| | Thickness variation | 4.4 | 4.4 | 3.0 |
| Evaluation | Quality | A | A | B |
| | Appearance of surfaces | C | D | A |
| | Tearing resistance | A | A | C |
| | Formability | S | S | C |
| | Mold-releasing property | A | A | A |

[Table 19]

| | | Reference Comparative Example 4 | Reference Comparative Example 5 |
|---|---|---|---|
| Constitution | Layer constitution | Layer A | Layer A |
| | Thickness (μm) | 100 | 100 |
| | Thickness ratio (Layer B/ Layer A) | - | - |

(continued)

| | | Reference Comparative Example 4 | Reference Comparative Example 5 |
|---|---|---|---|
| Layer A | Composition (% by mass) | Cyclic olefin polymer B (100% by mass) | Cyclic olefin polymer A (35% by mass) Cyclic olefin polymer B (10% by mass) PP (55% by mass) |
| | Glass transition temperature (°C) | 135 | 88 |
| Layer B | Composition (% by mass) | - | - |
| | Glass transition temperature (°C) | - | - |
| Film composition | Cyclic olefin polymer (% by mass) | 100 | 45 |
| | Polyethylene-based resin and/or polypropylene-based resin (% by mass) | - | 55 |
| | Fatty acid metal salt (% by mass) | - | - |
| Film Property | Tear propagation resistance (N/mm) | 5.2/4.9 | 44.6/42.1 |
| | Gloss value (-) (Surface on the casting roll side/ Surface on the non-casting roll side) | 162/161 | 120/118 |
| | Tensile elongation at break at 120°C (%) | 240/221 | 1841/1754 |
| | Thickness variation | 2.9 | 8.4 |
| Evaluation | Quality | C | A |
| | Appearance of surfaces | A | C |
| | Tearing resistance | D | S |
| | Formability | D | A |
| | Mold-releasing property | A | A |

It is noted here that, with regard to the storage elastic modulus, tensile elongation at break and tear propagation resistance, the above Tables show the measurement results that were obtained in both an arbitrary direction and the direction perpendicular thereto.

INDUSTRIAL APPLICABILITY

The film for molding according to the present invention exhibits excellent dimensional stability during processings such as coating, lamination, printing and vapor deposition and can achieve good formability in a variety of molding methods such as vacuum molding, compression molding and press molding. Therefore, the film for molding according to the present invention can be applied to a variety of molding processes and suitably used for decoration of transfer molded parts such as building materials, automotive parts, cellular phones, electric appliances and game machine components.

**Claims**

1. A film for molding, which comprises a cyclic olefin polymer in an amount of 50% by mass to 100% by mass with respect to the total amount of said film for molding and has a storage elastic modulus at 75°C of 1,000 MPa to 3,000 MPa and a storage elastic modulus at 120°C of not greater than 100 MPa.

2. The film for molding according to claim 1, which comprises
a layer A comprising a cyclic olefin polymer in an amount of 50% by mass to 100% by mass and a polyethylene-based resin and/or a polypropylene-based resin in a combined amount of 1% by mass to 40% by mass with respect to the total amount of said layer A; and
a layer B which is laminated at least on either side of said layer A and comprises a cyclic olefin polymer in an amount of 50% by mass to 100% by mass with respect to the total amount of said layer B.

3. The film for molding according to claim 2, wherein said layer A has a glass transition temperature of 70°C to 110°C.

4. The film for molding according to claim 2 or 3, wherein said layer B has a glass transition temperature of 75°C to 120°C, said glass transition temperature of said layer B being higher than that of said layer A.

5. The film for molding according to any one of claims 1 to 4, which comprises a fatty acid metal salt in an amount of 0.01 % by mass to 0.5% by mass with respect to the total amount of said film.

6. A molding transfer foil, in which, at least on either side of the film for molding according to any one of claims 1 to 5, a clear coat layer, a decoration layer and an adhesion layer are laminated in this order from the side of said film for molding.

## INTERNATIONAL SEARCH REPORT

| | |
|---|---|
| | International application No. |
| | PCT/JP2011/069264 |

| | |
|---|---|
| A. CLASSIFICATION OF SUBJECT MATTER | |
| *C08J5/18*(2006.01)i, *B32B27/00*(2006.01)i | |

According to International Patent Classification (IPC) or to both national classification and IPC

**B. FIELDS SEARCHED**

Minimum documentation searched (classification system followed by classification symbols)
C08J5/18, B32B27/00-27/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-21756 A (Mitsubishi Plastics, Inc.), 01 February 2007 (01.02.2007), claims 1 to 7; paragraphs [0001], [0015], [0017], [0020], [0032], [0047]; examples; comparative examples; table 1 (Family: none) | 1-6 |
| A | JP 2003-127287 A (Mitsubishi Plastics, Inc.), 08 May 2003 (08.05.2003), entire text (Family: none) | 1-6 |
| A | JP 2005-254458 A (Mitsubishi Plastics, Inc.), 22 September 2005 (22.09.2005), entire text (Family: none) | 1-6 |

| | | | |
|---|---|---|---|
| ☒ | Further documents are listed in the continuation of Box C. | ☐ | See patent family annex. |

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| | |
|---|---|
| Date of the actual completion of the international search | Date of mailing of the international search report |
| 14 September, 2011 (14.09.11) | 27 September, 2011 (27.09.11) |
| Name and mailing address of the ISA/ | Authorized officer |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/069264

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-238739 A  (JSR Corp.),<br>08 September 2005 (08.09.2005),<br>entire text<br>(Family: none) | 1-6 |
| A | JP 2010-31252 A  (Polyplastics Co., Ltd.,<br>Daicel Chemical Industries, Ltd.),<br>12 February 2010 (12.02.2010),<br>entire text<br>(Family: none) | 1-6 |

Form PCT/ISA/210 (continuation of second sheet) (July 2009)

**EP 2 617 758 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001347565 A
- JP 2008095084 A
- JP 2007246910 A
- JP 2004188708 A
- JP 2006257399 A
- JP 2005162965 A